(19) **Europäisches Patentamt / European Patent Office / Office européen des brevets**

(11) **EP 4 361 594 B1**

(12) **EUROPEAN PATENT SPECIFICATION**

(45) Date of publication and mention
of the grant of the patent:
**06.05.2026 Bulletin 2026/19**

(21) Application number: **22828123.4**

(22) Date of filing: **25.05.2022**

(51) International Patent Classification (IPC):
*G01N 15/0205* (2024.01)    *G01N 21/17* (2006.01)
*G01N 21/27* (2006.01)    *G01N 21/49* (2006.01)
*G01N 15/075* (2024.01)    *G01N 21/21* (2006.01)
*G01N 21/41* (2006.01)    *G01N 21/53* (2006.01)
*G01N 21/59* (2006.01)    *G01N 15/00* (2024.01)
*G01N 15/06* (2024.01)

(52) Cooperative Patent Classification (CPC):
**G01N 15/0211; G01N 15/075; G01N 21/17;**
**G01N 21/21; G01N 21/27; G01N 21/41;**
**G01N 21/49; G01N 21/532; G01N 21/59;**
G01N 2015/0053; G01N 2015/0222

(86) International application number:
**PCT/JP2022/021361**

(87) International publication number:
**WO 2022/270204 (29.12.2022 Gazette 2022/52)**

(54) **PARTICLE MEASUREMENT DEVICE AND PARTICLE MEASUREMENT METHOD**

PARTIKELMESSVORRICHTUNG UND PARTIKELMESSVERFAHREN

DISPOSITIF DE MESURE DE PARTICULES ET PROCÉDÉ DE MESURE DE PARTICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2021 JP 2021102668**
**30.11.2021 JP 2021194045**

(43) Date of publication of application:
**01.05.2024 Bulletin 2024/18**

(73) Proprietor: **FUJIFILM Corporation**
**Tokyo 106-8620 (JP)**

(72) Inventors:
• **NAKAMURA, Sohichiro**
**Ashigarakami-gun, Kanagawa 258-8577 (JP)**
• **HAMADA, Kenichi**
**Ashigarakami-gun, Kanagawa 258-8577 (JP)**

(74) Representative: **Meissner Bolte Partnerschaft
mbB**
**Patentanwälte Rechtsanwälte**
**Postfach 86 06 24**
**81633 München (DE)**

(56) References cited:
WO-A1-2011/045961    WO-A1-2017/069260
WO-A1-2020/096038    WO-A1-2021/199797
CN-A- 103 487 356    CN-A- 103 487 356
JP-A- 2005 134 205    JP-A- 2017 528 689
JP-A- 2018 031 660    JP-A- 2020 193 877
US-A1- 2014 152 986    US-A1- 2016 266 028
US-B2- 8 456 635

• CHARALAMPOPOULOS ET AL: "Morphology
and dynamics of agglomerated particulates in
combustion systems using light scattering
techniques", PROGRESS IN ENERGY AND
COMBUSTION SCIENCE, ELSEVIER SCIENCE
PUBLISHERS, AMSTERDAM, NL, vol. 18, no. 1,
22 February 1991 (1991-02-22), pages 13 - 45,
XP025413729, ISSN: 0360-1285, [retrieved on
19920101], DOI: 10.1016/0360-1285(92)90031-U

EP 4 361 594 B1

**Description**

**BACKGROUND OF THE INVENTION**

1. Field of the Invention

The present invention relates to a particle measurement device and a particle measurement method that measure a complex refractive index of a single type of particle included in a dispersion liquid.

2. Description of the Related Art

There is known a dynamic light scattering measurement method that checks dynamic characteristics of scatterers by applying light to a medium, such as a colloidal solution or a particle dispersion liquid, and detecting a time variation of a scattered light intensity scattered from the scatterers in the medium using an autocorrelation function or a power spectrum. The dynamic light scattering measurement method has been widely used in various kinds of measurement, such as particle diameter measurement and gel structure analysis.

For example, JP1990-63181B (JP-H02-63181B) describes a particle diameter measurement device comprising a laser device that irradiates a particle group to be measured with laser beam, a measurement system that measures an intensity per scattering angle of scattered light emitted from the laser device and scattered by the particle group to be measured, as a scattered light intensity distribution, a relative particle diameter distribution calculation unit that calculates a relative particle size distribution from measured values of the scattered light intensity distribution obtained by the measurement system, a conversion table that stores conversion coefficients obtained by calculating, for each scattering angle, ratios between measured values and theoretical values of a scattered light intensity distribution obtained by irradiating a reference particle group with known particle diameter and particle diameter density with laser beam, a conversion unit that converts the measured values of the scattered light intensity distribution obtained by irradiating the particle group to be measured with laser beam, based on the conversion table and obtains an incident scattered light intensity distribution in an incidence portion of the measurement system, and an absolute particle diameter distribution calculation unit that calculates an absolute particle diameter distribution from the incident scattering intensity distribution obtained by the conversion unit and the relative particle diameter distribution of the particle group to be measured obtained by the relative particle diameter distribution calculation unit.

US 2014/152986 A1 discloses a method and apparatus for improving measurements of scattered light from particles by controlling multiple scattering and coincidence count levels.

**SUMMARY OF THE INVENTION**

As described above, JP1990-63181B (JP-H02-63181B) describes that the absolute particle diameter distribution is calculated using the scattered light intensity distribution that is the intensity per scattering angle of scattered light scattered by the particle group to be measured. Note that, in JP1990-63181B (JP-H02-63181B), the particle size distribution can be measured, but a refractive index of a particle cannot be measured.

While there is a need to obtain information regarding a refractive index for a measurement target particle, information regarding the refractive index cannot be obtained at present.

An object of the present invention is to provide a particle measurement device and a particle measurement method capable of measuring a complex refractive index and a particle size distribution of a single type of particles included in a dispersion liquid.

To attain the above-described object, the invention provides a particle measurement device according to claim 1 and a particle measurement method according to claim 10. Advantageous aspects are set out in the dependent claims.

**BRIEF DESCRIPTION OF THE DRAWINGS**

Fig. 1 is a schematic view showing a first example of a particle measurement device of an embodiment of the present invention.

Fig. 2 is a flowchart illustrating a first example of a particle measurement method not forming part of the present invention.

Fig. 3 is a graph showing an example of a relationship between a scattering intensity and a scattering angle of an aqueous dispersion liquid of polystyrene particles.

Fig. 4 is a graph showing an example of a secondary autocorrelation function of each scattering angle.

Fig. 5 is a graph showing calculated values of a scattering angle and a scattering intensity of each refractive index of particles having the same particle size.

Fig. 6 is a graph showing an example of a relationship between a scattering intensity and a measurement wavelength.

Fig. 7 is a graph showing another example of a relationship between a scattering intensity and a measurement wavelength.

Fig. 8 is a graph showing a relationship between a scattering intensity and a scattering angle of each particle shape.

Fig. 9 is a schematic view showing a second example of a particle measurement device of the embodiment of the present invention.

Fig. 10 is a schematic view showing a third example of a particle measurement device of the embodiment of the present invention.

Fig. 11 is a histogram of a particle.

Fig. 12 is a flowchart showing an example of a particle measurement method of the embodiment of the present invention.

Fig. 13 is a schematic view showing a fourth example of a particle measurement device of the embodiment of the present invention.

Fig. 14 is a graph showing a particle size distribution of polystyrene particles.

Fig. 15 is a graph showing a relationship between a scattering intensity and a scattering angle of a polystyrene particle.

Fig. 16 is a graph showing a secondary autocorrelation function of the polystyrene particle.

Fig. 17 is a graph showing a particle size distribution of titanium oxide particles.

Fig. 18 is a graph showing a relationship between a scattering intensity and a scattering angle of a titanium oxide particle.

Fig. 19 is a graph showing a secondary autocorrelation function of the titanium oxide particle.

Fig. 20 is a graph showing a particle size distribution of a sample 3.

Fig. 21 is a graph showing a relationship between a scattering intensity and a scattering angle of the sample 3.

Fig. 22 is a graph showing a secondary autocorrelation function of the sample 3 at a scattering angle of 50°.

Fig. 23 is a graph showing a secondary autocorrelation function of the sample 3 at a scattering angle of 90°.

Fig. 24 is a graph showing a secondary autocorrelation function of the sample 3 at a scattering angle of 150°.

Fig. 25 is a graph showing transmittance of the sample 3.

## DESCRIPTION OF THE PREFERRED EMBODIMENTS

Hereinafter, a particle measurement device and a particle measurement method of an embodiment of the present invention will be described in detail based on a preferred embodiment shown in the accompanying drawings.

The drawings described below are exemplary for describing the present invention, and the present invention is not limited to the drawings described below.

Hereinafter, the expression "to" indicating a numerical range includes numerical values described on both sides. For example, $\varepsilon$ is a numerical value $\varepsilon_A$ to a numerical value $\varepsilon_B$ means that a range of $\varepsilon$ is a range including the numerical value $\varepsilon_A$ and the numerical value $\varepsilon_B$, and is represented as $\varepsilon a \leq \varepsilon \leq \varepsilon_B$ by mathematical signs.

Angles, such as "angles represented by specific numerical values" and "vertical", include error ranges generally tolerated in the technique field unless specifically described.

(First Example of Particle Measurement Device)

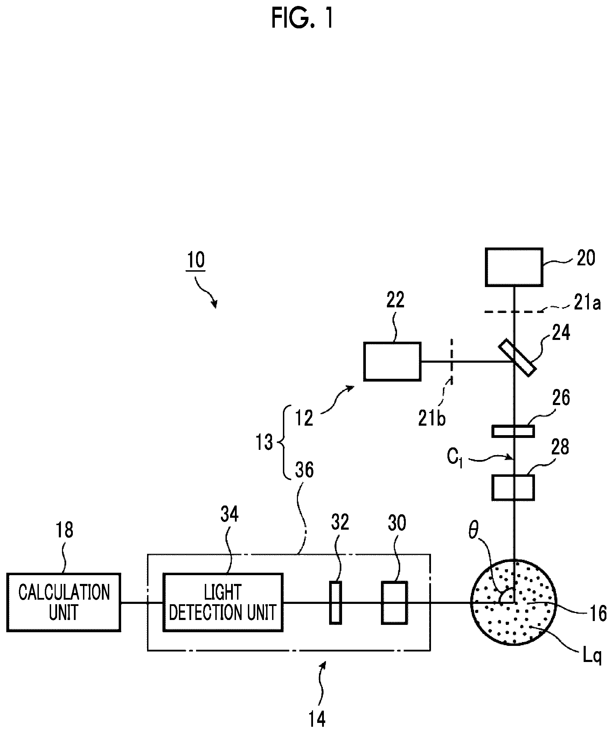

Fig. 1 is a schematic view showing a first example of a particle measurement device of an embodiment of the present invention.

A particle measurement device 10 shown in Fig. 1 has an incidence setting unit 12 that irradiates a sample cell 16 in which a dispersion liquid Lq including a single type of particles is stored, with laser light as measurement light, a scattered light measurement unit 14 that measures a scattering intensity of scattered light generated by scattering of laser light in the dispersion liquid Lq, and a calculation unit 18 that calculates a refractive index and a particle diameter distribution of the single type of particles included in the dispersion liquid. A complex refractive index has a real part and an imaginary part, and the real part of the complex refractive index is referred to as a so-called refractive index. The imaginary part of the complex refractive index is referred to as an extinction coefficient representing absorption. The imaginary part of the complex refractive index has a value close to zero in a case where the transmittance of the particle is high.

The incidence setting unit 12 has a first light source unit 20 that emits laser light as measurement light to the dispersion liquid Lq, a second light source unit 22 that emits laser light as measurement light to the dispersion liquid Lq, a half mirror 24, a condenser lens 26 that condenses laser light transmitted through or reflected by the half mirror 24 to the sample cell 16, and a polarizer 28 that transmits only a given polarized component out of laser light. A first shutter 21a is provided between the first light source unit 20 and the half mirror 24. A second shutter 21b is provided between the second light source unit 22 and the half mirror 24. Laser light emitted from the first light source unit 20 is made to be incident on or is shielded to prevent incidence on the half mirror 24 by the first shutter 21a. Laser light emitted from the second light source unit 22 is made to be incident on or is shielded to prevent incidence on the half mirror 24 by the second shutter 21b.

The first shutter 21a and the second shutter 21b are not particularly limited as long as emitted laser light can be made to be incident on the half mirror 24 or can be shielded, and a known on-off shutter that is used for control of emission of laser light can be used.

Instead of providing the first shutter 21a and the second shutter 21b, for example, the emission of the first light source unit 20 and the emission of the second light source unit 22 may be controlled to control the emission of laser light to the half mirror 24.

The half mirror 24 transmits laser light emitted from the first light source unit 20 and reflects laser light emitted from the second light source unit 22, for example, at 90° with respect to an incidence direction to the same optical path as laser light emitted from the first light source unit 20. Laser light transmitted through the half mirror 24 and laser light reflected by the half mirror 24 passes through the same optical axis $C_1$. The condenser lens 26 and the polarizer 28 are disposed on the optical axis $C_1$. The sample cell 16 is disposed on the optical axis $C_1$.

A shutter (not shown) that temporarily shields an optical path of laser light and a neutral density (ND) filter (not shown) that attenuates laser light may be provided on the optical axis $C_1$ of the laser light.

The ND filter is provided to adjust a light amount of laser light, and a known ND filter can be suitably used.

As the polarizer 28, a polarizer according to polarized light with which the sample cell 16 is irradiated, such as circularly polarized light, linearly polarized light, or elliptically polarized light, is suitably used. In a case where it is not necessary to irradiate the sample cell 16 with polarized light, the polarizer 28 is not always required.

The first light source unit 20 irradiates the dispersion liquid Lq with laser light as measurement light to the dispersion liquid Lq, and is, for example, an Ar laser that emits laser light having a wavelength of 488 nm. The wavelength of laser light is not particularly limited.

The second light source unit 22 irradiates the dispersion liquid Lq with laser light as measurement light to the dispersion liquid Lq, and is, for example, a He-Ne laser that emits laser light having a wavelength of 633 nm. The wavelength of laser light is not particularly limited.

The first light source unit 20 and the second light source unit 22 are different in wavelength of laser light. In the particle measurement device 10, an appropriate wavelength is different depending on a target particle to be measured. For this reason, it is desirable to select a combination of wavelengths such that a refractive index difference of a plurality of particles is considerably different between wavelengths.

The incidence setting unit 12 sets at least one of a scattering angle or a measurement wavelength as a measurement parameter. As the measurement parameter, there are the scattering angle, the measurement wavelength, and a combination of the scattering angle and the measurement wavelength. In the measurement parameter, a value of the scattering angle is two angles or more, and the measurement wavelength is two wavelengths or more.

Here, the two angles are the number of scattering angles. The two angles are, for example, scattering angles of 45° and 90°.

The two wavelengths are the number of measurement wavelengths. The two wavelengths are, for example, a wavelength of 633 nm and a wavelength of 488 nm.

The scattering angle is changed, for example, by a rotation unit 36 described below rotating the scattered light measurement unit 14 around the sample cell 16, and can be two angles or more. A parameter setting unit 13 is configured with the incidence setting unit 12 and the rotation unit 36 described below. As described above, at least one of the scattering angle or the measurement wavelength is set as the measurement parameter by the parameter setting unit 13.

The measurement wavelength is changed by appropriately switching the first light source unit 20 and the second light source unit 22, and the measurement wavelength can be two wavelengths or more. For example, laser light having different wavelengths is emitted as measurement light from the first light source unit 20 and the second light source unit 22.

From this, the light source units according to the number of measurement wavelengths are provided, and the present invention is not limited to the first light source unit 20 and the second light source unit 22. In a case where the measurement wavelength is not changed, one of the first light source unit 20 and the second light source unit 22 may be provided. The light sources may be increased to increase the number of measurement wavelengths.

The sample cell 16 is, for example, a rectangular parallelepiped or columnar container formed of optical glass or optical plastic. The dispersion liquid Lq including a single type of particles as a measurement target is stored in the sample cell 16. The dispersion liquid Lq is irradiated with laser light as measurement light to the dispersion liquid Lq.

The sample cell 16 may be disposed inside an immersion bath (not shown). The immersion bath is provided to eliminate a refractive index difference or to make a temperature uniform.

The scattered light measurement unit 14 measures the scattering intensity of the scattered light generated by scattering of laser light in the dispersion liquid Lq as described above.

The scattered light measurement unit 14 obtains a plurality of pieces of scattering intensity data by measuring a scattering intensity of scattered light emitted from the dispersion liquid Lq by measurement light a plurality of times while changing the value of the measurement parameter set by the parameter setting unit 13 a plurality of times. Examples of a plurality of times of measurement of the scattering intensity of scattered light include measurement for each of a plurality of scattering angles and measurement for each of a plurality of measurement wavelengths.

The scattered light measurement unit 14 has a polarizer 30 that transmits only a given polarized component of scattered light from the sample cell 16, a condenser lens 32 that focuses scattered light on a light detection unit 34, and the light detection unit 34 that detects scattered light.

To appropriately set a scattering volume of a sample, a first pinhole (not shown) and a second pinhole (not shown) may be provided.

As the polarizer 30, a polarizer according to polarized light to be detected, such as circularly polarized light, linearly polarized light, or elliptically polarized light, is suitably used. The polarizer 30 may be configured in such a manner that a polarizer that detects circularly polarized light and a polarizer that detects linearly polarized light are provided in parallel and are switched according to polarized light to be detected, and the light intensity of each polarized component of scattered light may be detected by the light detection unit 34.

In a case where it is not necessary to measure the light intensity of the polarized component of scattered light, the polarizer 30 is not always required.

The light detection unit 34 is not particularly limited as long as the intensity of scattered light can be detected, and for example, a photomultiplier tube, a photodiode, an avalanche photodiode, and a time correlator are used.

The rotation unit 36 that rotates the scattered light measurement unit 14 to change an angle of scattered light is provided. An angle of a scattering angle θ can be changed by the rotation unit 36. The angle of the scattering angle θ is a scattering angle. In Fig. 1, the angle of the scattering angle is 90°. That is, the scattering angle is 90°. As the rotation unit 36, for example, a goniometer is used. For example, the scattered light measurement unit 14 is placed on the goniometer as the rotation unit 36, and the scattering angle θ is adjusted by the goniometer.

The particle measurement device 10 has the first light source unit 20 and the second light source unit 22 that emit different kinds of laser light as described above, whereby dynamic light scattering measurement can be performed using the measurement wavelength of two wavelengths or more, and a plurality of pieces of scattering intensity data are obtained for the particles in the dispersion liquid Lq.

The particle measurement device 10 has the rotation unit 36 that rotates the scattered light measurement unit 14 as described above, whereby dynamic light scattering measurement can be performed while changing the angle of the scattering angle θ, that is, the value of the scattering angle by two angles or more, and a plurality of pieces of scattering intensity data are obtained for the particles in the dispersion liquid Lq.

The calculation unit 18 calculates a refractive index and a particle size distribution of particles in the dispersion liquid Lq including the single type of particles based on the intensity of scattered light detected by the light detection unit 34. The calculation unit 18 stores a theoretical formula that defines a relationship of a refractive index, a particle diameter, and a scattering intensity described below, and performs fitting described below. The calculation unit 18 can also obtain a particle number in addition to the refractive index and the particle size distribution of the particles.

The calculation unit 18 obtains the refractive index and the particle diameter distribution of the single type of particles by calculating a plurality of pieces of scattering intensity time variation characteristic data of the measurement parameter and a plurality of pieces of scattering intensity parameter-dependent data of the measurement parameter from a plurality of pieces of scattering intensity data obtained by scattered light measurement unit 14 and fitting a plurality of pieces of calculated scattering intensity time variation characteristic data of the measurement parameter and a plurality of pieces of calculated scattering intensity parameter-dependent data of the measurement parameter using a theoretical formula or a simulation based on a theory of electromagnetic wave behavior that defines the relationship of the refractive index, the particle diameter, and the scattering intensity. The fitting will be described below.

The scattering intensity time variation characteristic data of the measurement parameter and the scattering intensity parameter-dependent data of the measurement parameter calculated by the simulation based on the theory of electromagnetic wave behavior, instead of the theoretical formula that defines the relationship of the refractive index, the particle diameter, and the scattering intensity, may be used.

In the calculation unit 18, the calculated scattering intensity time variation characteristic data of the measurement parameter described above is calculated based on a Stokes-Einstein's theoretical formula. For example, the scattering intensity parameter-dependent data is calculated based on at least one of a Mie scattering theoretical formula, a discrete dipole approximation method (DDA method), or a finite-difference time-domain method (FDTD method). The discrete dipole approximation method (DDA method) and the finite-difference time-domain method (FDTD method) correspond to the simulation based on the theory of electromagnetic wave behavior. A method corresponding to the simulation based on the theory of electromagnetic wave behavior can be suitably used, and is not particularly limited to the discrete dipole approximation method (DDA method) and the finite-difference time-domain method (FDTD method) described above.

The theoretical formula is not particularly limited to the above-described formula, and various theoretical formulas, such as a scattering theory, can be suitably used.

A program (computer software) stored in a read only memory (ROM) or the like is executed by the calculation unit 18, whereby the calculation unit 18 obtains the particle size distribution of the particle as described above. The calculation unit 18 may be configured with a computer in which the program is executed as described above, so that each part functions, may be a dedicated device in which each part is configured with a dedicated circuit, or may be configured with a server as being executed on a cloud.

In measuring the scattering intensity of the dispersion liquid, there is a scattering angle as a measurement parameter. In a case where the measurement parameter is the scattering angle, the scattering intensity of the dispersion liquid is measured for each of a plurality of scattering angles while changing the value of the scattering angle by two angles or more as the value of the measurement parameter. In this case, for example, the measurement wavelength is fixed to one wavelength.

In a case where the measurement parameter is the measurement wavelength of measurement light, the scattering intensity of the dispersion liquid is measured for each of a plurality of measurement wavelengths using the measurement wavelength of two wavelengths or more. In this case, for example, the scattering angle is fixed to one angle. The two wavelengths are the value of the measurement parameter.

As the measurement parameter, the scattering angle and the measurement wavelength. In this case, with the value of the scattering angle of two angles or more, the measurement wavelength of two wavelengths or more, and combinations of the respective scattering angles and the measurement wavelengths, the scattering intensity of the dispersion liquid is measured for each of a plurality of combinations of scattering angles and measurement wavelengths.

The value of the scattering angle is not particularly limited as long as two angles or more are provided, but is suitably decided from the number of pieces of scattering intensity data, a measurement time, and the like. It is preferable that the value of the scattering angle is more than 0° and equal to or less than 180°.

The measurement wavelength is not particularly limited as long as two wavelengths or more are provided. The measurement wavelength is suitably decided considering that, in a case where the measurement wavelengths increase, more light sources are required, and an optical element that separates wavelengths is required.

The measurement wavelength is not particularly limited, and light of respective wavelengths, such as ultraviolet light, visible light, and infrared light, can be suitably used.

Although the scattering intensity can be measured by one measurement device with the dynamic light scattering measurement method or device as described above, measurement data of two different devices of the dynamic light scattering device and a light scattering goniophotometer may be used in combination. In a case of the wavelength, a spectrometer may be employed. As described above, a device form is not limited as using the particle measurement device 10 shown in Fig. 1, for example.

The particle in the dispersion liquid is single. That is, assuming that the particles in the dispersion liquid are one type, a theoretical formula that defines a relationship of a refractive index, a particle diameter, and a scattering intensity is set, and a refractive index and a particle diameter distribution of the single type of particles are calculated.

(First Example of Particle Measurement Method)

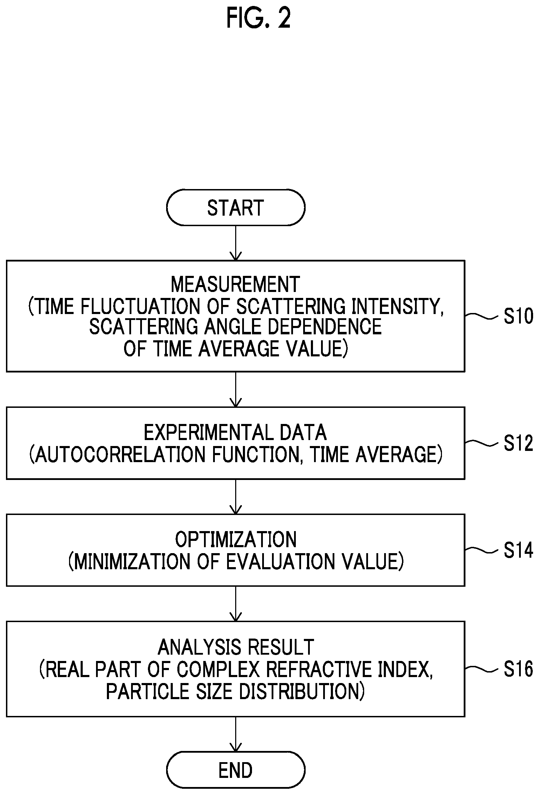

Fig. 2 is a flowchart illustrating a first example of a particle measurement method not forming part of the present invention.

In the first example of the particle measurement method, the measurement parameter is the scattering angle, and the scattering intensity of the dispersion liquid is measured for each of a plurality of scattering angles while changing the value of the scattering angle by two angles or more.

As shown in Fig. 2, the particle measurement method has, for example, a measurement step (Step S10), a step of obtaining experimental data (Step S12), and an optimization step (Step S14). Through the optimization step (Step S14), an analysis result (Step S16), that is, a refractive index (a real part of a complex refractive index) and a particle diameter distribution of a single type of particles are obtained (Step S16). The particle diameter distribution is a distribution of the number of particles with respect to the particle diameter, and for example, is in units of %.

In the measurement step (Step S10), for example, the time fluctuation of the scattering intensity and scattering angle dependence of a time average value of the scattering intensity are measured.

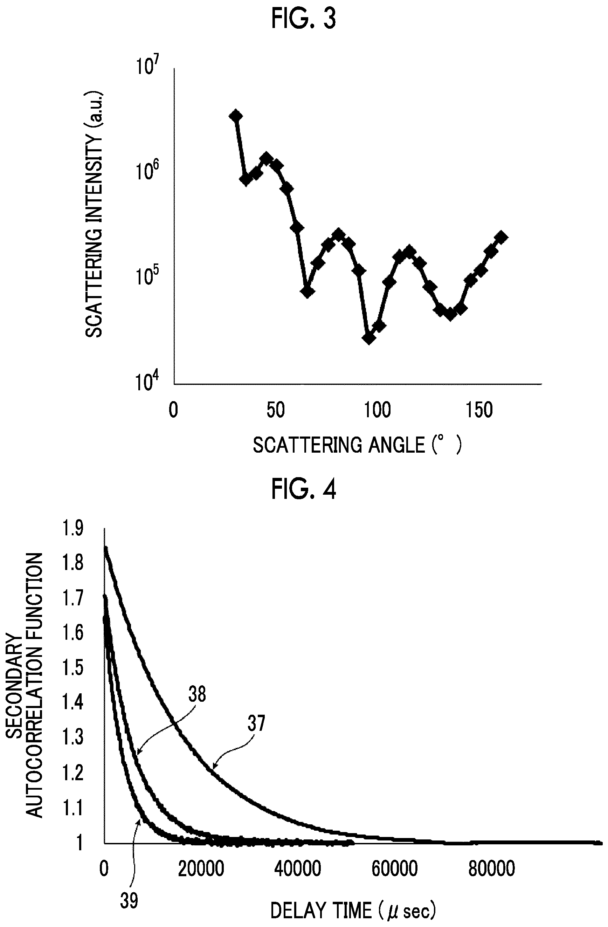

In the step of obtaining experimental data (Step S12), for example, an autocorrelation function with respect to the time fluctuation of the scattering intensity is obtained based on a measured value of the measurement step (Step S10). The scattering angle dependence of the time average value of the scattering intensity or a wavelength-dependent time average value of the scattering intensity is obtained. With this, for example, the scattering intensity per scattering angle shown in Fig. 3 is obtained.

In the optimization step (Step S14), for example, an autocorrelation function and a theoretical formula of the scattering intensity are fitted to the autocorrelation function of the time fluctuation of the scattering intensity and the time average value of the scattering intensity obtained in Step S12. In Step S14, after an initial value is set for a particle number with respect to a particle diameter of a single particle, the particle number is updated such that an evaluation value is minimized, to obtain a final particle number. The initial value is set by generating a random variable.

Hereinafter, the particle measurement method will be more specifically described in detail, including the fitting.

First, for example, the dispersion liquid Lq is irradiated with the laser light having a wavelength of 633 nm from the second light source unit 22 shown in Fig. 1. Scattered light scattered by irradiation is detected by the light detection unit 34 at a predetermined scattering angle for a predetermined time. With this, the scattering intensity of the dispersion liquid Lq at the scattering angle can be obtained.

Next, the rotation unit 36 rotates the scattered light measurement unit 14 to change the scattering angle θ, and the scattering intensity of the dispersion liquid Lq is obtained. The change of the scattering angle and the measurement of the scattering intensity of the dispersion liquid Lq are repeatedly performed, and the scattering intensity of the dispersion liquid Lq is measured a plurality of times. The value of the scattering angle is two angles or more, and for example, the scattering intensity is measured for every 5° from 30° to 160°. The above step is the measurement step, and corresponds to Step S10 described above.

Next, the calculation unit 18 calculates the scattering intensity time variation characteristic data from the time dependence of the scattering intensity of the dispersion liquid Lq obtained by the measurement step. The scattering intensity time variation characteristic data is an autocorrelation function or a power spectrum.

The autocorrelation function is calculated from the scattering intensity of the dispersion liquid using a known method. The power spectrum is also calculated from the scattering intensity of the dispersion liquid using a known method.

In this manner, the scattering intensity time variation characteristic data is obtained for each scattering angle. That is, there are a plurality of pieces of time variation data.

Next, the calculation unit 18 calculates the scattering intensity parameter-dependent data from the scattering intensity of the dispersion liquid obtained by the measurement step.

The scattering intensity parameter-dependent data of the dispersion liquid is obtained, for example, by calculating the time average value of the scattering intensity of the dispersion liquid for each scattering angle. With this, for example, data of the scattering intensity per scattering angle shown in Fig. 3 is obtained.

The above step of calculating the scattering intensity time variation characteristic data of the dispersion liquid and the scattering intensity parameter-dependent data of the dispersion liquid is the calculation step, and corresponds to Step S12 described above.

Next, the calculation unit 18 fits the scattering intensity time variation characteristic data of at least one or more scattering angles and the scattering intensity parameter-dependent data of a plurality of scattering angles using the theoretical formula or the simulation based on the theory of electromagnetic wave behavior that defines the relationship of the refractive index, the particle diameter, and the scattering intensity. The refractive index (the real part of the complex refractive index) and the particle size distribution of the single type of particles are calculated by the above-described fitting. This corresponds to Steps S14 and S16 described above.

As described above, one type of particles is included in the dispersion liquid.

A linear autocorrelation function is represented by $g^{(1)}(\tau) = \exp(-Dq^2\tau)$. In regard to a relationship between a diffusion coefficient obtained from the autocorrelation function and a particle size, a Stokes-Einstein's formula that is used in a normal dynamic light scattering method is applied.

In a case where there is a particle size distribution in the particles, the linear autocorrelation function is represented by Expression (1) described below. The scattering intensity is represented by Expression (2) described below. Expressions (1) and (2) described below are theoretical formulas, and both $I_\theta^{total}$ in Expressions (1) and (2) are calculated values.

$$g_\theta^{(1)}(\tau) = \sum_{d=d_0}^{d_M} \frac{N_d I_\theta(d,m)}{I_\theta^{total}} exp\left(-D_d q_\theta^2 \tau\right) \quad (1)$$

$$I_\theta^{total} = \sum_{d=d_0}^{d_M} N_d I_\theta(d,m) \quad (2)$$

In Expression (1), $g^{(1)}$ indicates the linear autocorrelation function. The linear autocorrelation function of Expression (1) is the linear autocorrelation function per scattering angle. The scattering intensity of Expression (2) is the scattering intensity per scattering angle. For this reason, Expressions (1) and (2) are obtained for each scattering angle to be measured.

In Expressions (1) and (2), $I_e^{total}$ indicates a total scattering intensity. d indicates a particle diameter. Each of subscripts 0 to M of d indicates an ordinal number of a bin of a histogram of the particles. N indicates a particle number. D indicates a diffusion coefficient. A subscript d of the diffusion coefficient D represents dependence on the particle diameter d. q indicates a scattering vector. $\tau$ indicates a time lag of the linear autocorrelation function. $\theta$ indicates a scattering angle. I indicates a scattering intensity. A subscript d of the scattering intensity I represents dependence on the particle diameter d. A subscript $\theta$ of the scattering intensity I represents dependence on the scattering angle $\theta$. The bins of the histogram are data sections, and are represented by bars in the histogram.

A portion $N_d I_{d,\,\theta}/I_\theta^{total}$ indicates a ratio of a scattering intensity of all single particles belonging to the bin of the particle diameter d to the total scattering intensity.

A scattering intensity with respect to particles having the particle diameter d and a relative complex refractive index m is given by the following expression according to a Mie scattering theory. The following expression is the theoretical formula that defines the relationship of the refractive index, the particle diameter, and the scattering intensity.

$$I_\theta(d,m) = \frac{\lambda^2}{4\pi^2 r^2}\left|\sum_{l=0}^{\infty}(-i)^l\left[A_l P_l{}'(\cos\theta)\sin\theta - B_l\frac{P_l(\cos\theta)}{\sin\theta}\right]\right|^2$$

Here, $P_l$ is a function obtained by partially differentiating the Legendre polynomial with $\theta$, and a subscript l represents an order of the Legendre polynomial. $\lambda$ indicates a wavelength in a solvent. d is a particle diameter, r is a distance from a particle, and m is a relative complex refractive index of the particle with respect to the medium. In a case where a refractive index of the medium is $n_0$, and a refractive index of the particle is n, m = $n/n_0$. In addition, coefficients $A_l$ (m,d) and $B_l$(m,d) are given by the following expressions. In the following expressions, ' is a differential regarding a factor in each function.

$$A_1(m,d) = i^{l+1}\frac{2l+1}{l(l+1)}\frac{m\psi_1'(x)\psi_1(mx) - \psi_1(x)\psi_1'(mx)}{m\zeta_1'(x)\psi_1(mx) - \zeta_1(x)\psi_1'(mx)}$$

$$B_1(m,d) = i^{l+1}\frac{2l+1}{l(l+1)}\frac{m\psi_1(x)\psi_1'(mx) - \psi_1'(x)\psi_1(mx)}{m\zeta_1(x)\psi_1'(mx) - \zeta_1'(x)\psi_1(mx)}$$

x is represented by the following expression. $\psi_l(\rho)$ and $\zeta_l(\rho)$ are represented by the following expressions, and in the following expressions, J is the Bessel function, and $\zeta$ is the Hankel function.

$$x(d) = \frac{\pi d}{\lambda}$$

$$\psi_l(\rho) = \sqrt{\frac{\pi\rho}{2}}J_{l+\frac{1}{2}}(\rho)$$

$$\zeta_l(\rho) = \sqrt{\frac{\pi\rho}{2}}H_{l+\frac{1}{2}}(\rho)$$

<First Example of Fitting>

Hereinafter, the fitting for calculating the refractive index (the real part of the complex refractive index) and the particle size distribution of the single type of particles will be described. In the fitting, the refractive index (the real part of the complex refractive index) and the particle size distribution of the single type of particles are finally calculated with the particle number as a variable.

A secondary autocorrelation function $g^{(2)}(\tau)$ is measured for each scattering angle, and while it is desirable that the scattering angle is two angles or more, but may be one angle. The number of scattering angles for measurement is suitably decided according to the number of variables to be calculated or the number of pieces of scattering intensity parameter-dependent data of the measurement parameter.

In the fitting, in regard to the linear autocorrelation function per scattering angle, an initial particle number is set with the particle number as a variable in Expression (1). A calculated value of the linear autocorrelation function of Expression (1) based on the set initial particle number is obtained. A calculated value of the secondary autocorrelation function $g^{(2)}(\tau) = 1 + \beta \cdot |g^{(1)}(\tau)|^2$ is obtained from the calculated value of the linear autocorrelation function. $\beta$ is a device constant.

A difference between the measured value of the secondary autocorrelation function and the calculated value of the secondary autocorrelation function is obtained for each scattering angle. The difference between the measured value of the secondary autocorrelation function and the calculated value of the secondary autocorrelation function is referred to as a difference in secondary autocorrelation function. The difference in secondary autocorrelation function is obtained for each scattering angle. The calculated value of the secondary autocorrelation function per scattering angle corresponds to the scattering intensity time variation characteristic data of the measurement parameter calculated by the theoretical formula.

The total scattering intensity $I^{total}$ is measured for each scattering angle. In Expression (2), a value of the total scattering intensity $I_e^{total}$ of Expression (2) based on the set initial particle number is obtained.

A difference between the measured value of the total scattering intensity $I^{total}$ shown in Fig. 3 and the calculated value of the total scattering intensity $I_e^{total}$ of Expression (2) is obtained for each scattering angle. The difference between the measured value of the total scattering intensity $I^{total}$ and the calculated value of the total scattering intensity $I_e^{total}$ of Expression (2) at any scattering angle is referred to as a difference in total scattering intensity $I^{total}$ at the scattering angle. In regard to the total scattering intensity $I^{total}$, the difference in total scattering intensity $I^{total}$ at the scattering angle is obtained. The calculated value of the total scattering intensity $I_e^{total}$ of Expression (2) corresponds to the scattering intensity parameter-dependent data of the measurement parameter calculated by the theoretical formula.

Note that, in a case where the calculated value of the secondary autocorrelation function is calculated using Expression (1) and in a case where the calculated value of the total scattering intensity is calculated using Expression (2), a ratio $\alpha = d_{SLS}/d_{DLS}$ of d (particle diameter in dynamic light scattering, referred to as $d_{DLS}$) of Expression (1) and d (particle diameter in static light scattering, referred to as $d_{SLS}$) of Expression (2) may be set to, for example, 0.78. Note that $\alpha$ is a coefficient that is decided by a structure of a particle.

In the fitting, to calculate the final particle number and the refractive index (the real part of the complex refractive index), the difference in secondary autocorrelation function obtained for the scattering angle described above and the difference in total scattering intensity at the scattering angle are used. For example, an evaluation value obtained by adding a value of the square of the difference in secondary autocorrelation function obtained for each scattering angle and a value of the square of the difference in total scattering intensity at the scattering angle for all scattering angles is used. The particle number with which the evaluation value is minimized is set as the final particle number.

For this reason, in the fitting, the particle number and the relative complex refractive index m are repeatedly updated in Expressions (1) and (2) such that the evaluation value is minimized, to obtain the final particle number and the relative complex refractive index m. Thereafter, assuming that the type, that is, the refractive index of the solvent is known, a refractive index n of the particle is obtained from the relative complex refractive index m. The refractive index n of the particle obtained from the relative complex refractive index m is the real part of the complex refractive index.

In the fitting, the values of the particle number and the relative complex refractive index m are updated in Expressions (1) and (2) while reflecting an expression indicating the relative complex refractive index m described above, and the measured values and the calculated values are fitted, so that the final particle number and the relative complex refractive index m are obtained. The refractive index is fitted through the expression indicating the relative complex refractive index m described above.

In regard to the particle numbers with respect to all particle diameters, an initial value is set, and then, is updated such that the evaluation value is minimized. With this, the histogram of the particles can be obtained. That is, $N_d^c$ is calculated for all $d = d_0$ to $d_M$, whereby the particle diameter distribution can be obtained. This corresponds to Step S16 described above.

The above step is the step of calculating the particle size distribution of the single type of particles (Step S16). The evaluation value that is used for the fitting is not limited to the value described above.

An optimization method of the fitting is not limited to the method described above, and for example, Bayesian optimization can be used for the fitting.

While the secondary autocorrelation function is used, the present invention is not limited thereto, and a power spectrum may be used in place of the secondary autocorrelation function. In a case where the linear autocorrelation function is measured through heterodyne detection, the linear autocorrelation function may be used.

Here, Fig. 3 is a graph showing an example of a relationship between a scattering intensity and a scattering angle of an aqueous dispersion liquid of polystyrene particles having a particle diameter of 990 nm. Fig. 4 is a graph showing an example of the secondary autocorrelation function per scattering angle, and shows scattering angle dependence of a secondary autocorrelation function of the aqueous dispersion liquid of the polystyrene particles having the particle diameter of 990 nm. In Fig. 4, reference numeral 37 indicates a secondary autocorrelation function of a scattering angle of 50°. Reference numeral 38 indicates a secondary autocorrelation function of a scattering angle of 90°. Reference numeral 39 indicates a secondary autocorrelation function of a scattering angle of 140°.

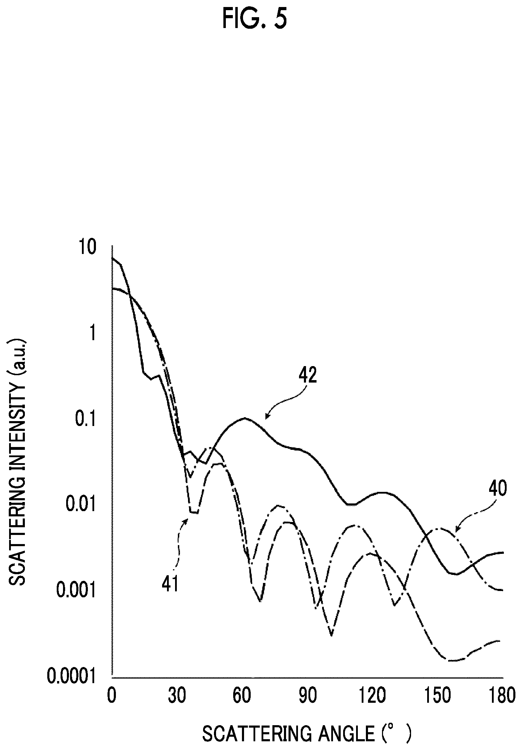

Fig. 5 is a graph showing calculated values of a scattering angle and a scattering intensity of each refractive index of particles having the same particle size, and shows a profile of a scattering intensity obtained by calculation. In Fig. 5, reference numeral 40 is a profile showing a relationship between a scattering angle and a scattering angle for a refractive index of 1.48. Reference numeral 41 is a profile showing a relationship between a scattering angle and a scattering angle for a refractive index of 1.59. Reference numeral 42 is a profile showing a relationship between a scattering angle and a scattering angle for a refractive index of 2.2. As shown in Fig. 5, in a case where the particles have the same particle size but have different refractive index, the profile of the scattering intensity with respect to the scattering angle is different.

The refractive index n = 1.59 and the particle diameter d = 990 nm of polystyrene are calculated by the above-described fitting. The refractive index n = 1.59 is the real part of the complex refractive index.

A way of calculating the refractive index and the particle diameter of polystyrene is as the above-described fitting. The values of the particle number and the relative complex refractive index m are updated in Expressions (1) and (2) while reflecting the expression indicating the relative complex refractive index m described above, and the measured values and the calculated values are fitted. The refractive index is fitted through the expression indicating the relative complex refractive index m described above. In this manner, the final particle number and the relative complex refractive index m are obtained. The particle size distribution is obtained by the particle diameters with which the final particle number is obtained.

Measurement results at different wavelengths can also be added to the calculated wavelength dependence of the refractive index, in addition to the scattering angle. That is, the scattered light intensity is measured for each of a plurality of measurement wavelengths using a plurality of measurement wavelengths of two wavelengths or more to obtain a plurality of pieces of scattered light data, and the number of types of particles, and the refractive index and the particle size distribution of each type of particle can also be calculated. In this case, the scattering angle may be one angle or may be a plurality of two angles or more.

The wavelength dependence of the refractive index can be obtained by changing the measurement wavelength. The wavelength dependence of the refractive index is also called refractive index distribution. In a case where the measurement wavelength is changed as the measurement parameter, the number of measurement wavelengths is not limited to two and may be three or four wavelengths as long as the number of measurement wavelengths is plural.

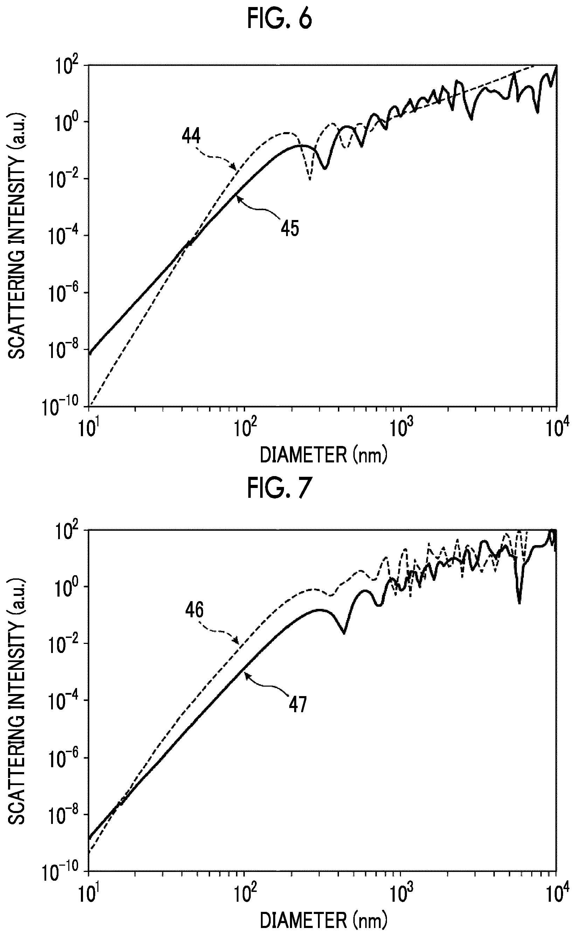

Here, Figs. 6 and 7 show a relationship between a scattering intensity and a measurement wavelength. Fig. 6 shows scattering intensities of two types of particles having different refractive indexes calculated at a measurement wavelength of 488 nm. As shown in Fig. 6, a profile 44 of a scattering intensity of a first particle and a profile 45 of a scattering intensity of a second particle are different.

Fig. 7 shows scattering intensities of two types of particles calculated at a measurement wavelength of 632.8 nm. As shown in Fig. 7, a profile 46 of a scattering intensity of a first particle and a profile 47 of a scattering intensity of a second particle are different. As shown in Figs. 6 and 7, the scattering intensity with respect to the measurement wavelength is different depending on a difference in refractive index of the particle.

For example, the scattering intensity parameter-dependent data of the dispersion liquid is obtained by calculating the time average value of the scattering intensity of the dispersion liquid for each laser light wavelength.

Information regarding the wavelength dependence of the refractive index can be obtained by increasing the number of measurement wavelengths, in addition to the scattering angle. In this case, a refractive index N can also be calculated by calculating values $D_1$ and $D_2$ in the same manner using a formula of wavelength dependence of the refractive index N, for example, a Cauchy's formula $N = D_1 + D_2/\lambda^2$.

With the use of such a formula decided based on an empirical or physical law, in a case where the number of measurement wavelengths is increased, the number of parameters required for the fitting is decreased, so that a calculation amount of the fitting can be reduced. With this, a time and the like required for the fitting can be reduced.

For the fitting, in addition to the theoretical formula, scattering intensity time variation characteristic data of the measurement parameter and scattering intensity parameter-dependent data of the measurement parameter calculated by a simulation can also be used.

In the measurement step, a light intensity of a polarized component of the scattered light of the dispersion liquid obtained by irradiating the dispersion liquid with measurement light having specific polarization may be measured as a scattering intensity. The measurement step is executed by the scattered light measurement unit 14.

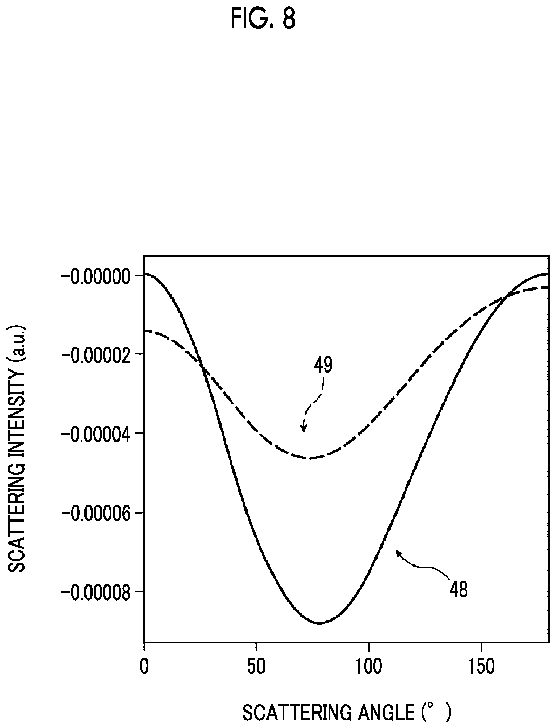

For example, the dispersion liquid Lq of the sample cell 16 is irradiated with circularly polarized laser light as measurement light, and a polarized component of the scattered light of the dispersion liquid Lq is measured. In regard to the light intensity of the polarized component of scattered light, for example, a difference between a light intensity of vertically linearly polarized light and a light intensity of horizontally linearly polarized light is measured as a scattering intensity. In this case, as in the first example of the particle measurement method described above, in a case where measurement is performed while changing the scattering angle, a graph showing a relationship between a scattering intensity and a scattering angle shown in Fig. 8 can be obtained. As shown in Fig. 8, a profile 48 of a scattering intensity of a spherical particle and a profile 49 of a scattering intensity of a disc-shaped particle are different.

Vertically linearly polarized light refers to that a direction of linearly polarized light is vertical in a case where a scattering surface is horizontal. Horizontally linearly polarized light refers to that a direction of linearly polarized light is horizontal in a case where the scattering surface is horizontal.

In the measurement step, at least one of scattering intensity parameter-dependent data obtained by successively irradiating the dispersion liquid with measurement light having a plurality of polarization states or scattering intensity measurement parameter-dependent data obtained by extracting a polarized component of scattered light emitted from the dispersion liquid a plurality of times may be measured. The measurement step is executed by the scattered light measurement unit 14 and the polarizer 28.

The scattering intensity parameter-dependent data obtained by successively irradiating the dispersion liquid with measurement light having a plurality of polarization states is obtained by bringing measurement light into the polarization state. The scattering intensity parameter-dependent data obtained by extracting the polarized component of scattered light emitted from the dispersion liquid a plurality of times is obtained by detecting the polarized component of scattered light without bringing measurement light into the polarization state. Data obtained by bringing measurement light into the polarization state and detecting the polarized component of the scattered light is also included in the above-described scattering intensity parameter-dependent data.

For example, in a case where polarization is used, the polarization state of measurement light can be circularly polarized light, and a difference between a vertically polarized light intensity and a horizontally polarized light intensity can be used for the polarized component of scattered light. For example, the polarization state of measurement light can be 45° linearly polarized light, and a sum of a vertically polarized light intensity and a horizontally polarized light intensity can be used for the polarized component of scattered light.

(Second Example of Particle Measurement Device)

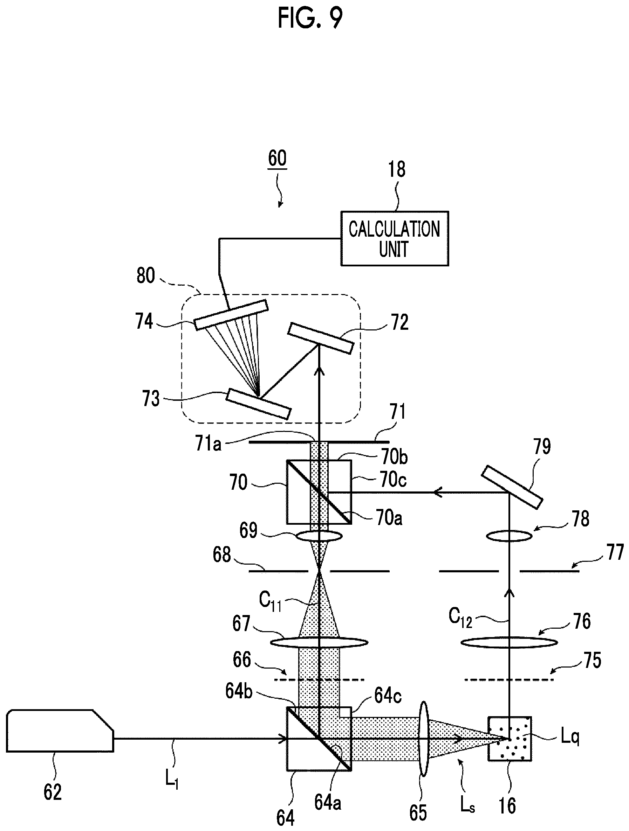

Fig. 9 is a schematic view showing a second example of a particle measurement device of the embodiment of the present invention.

In a particle measurement device 60 shown in Fig. 9, the same components as those in the particle measurement device 10 shown in Fig. 1 are represented by the same reference numerals, and detailed description thereof will not be repeated.

The particle measurement device 60 shown in Fig. 9 is different from the particle measurement device 10 shown in Fig. 1 in that a white light source is used and disposition of optical elements and the like are different.

The particle measurement device 60 has a light source unit 62, a beam splitter 64, a lens 65, and a sample cell 16. The light source unit 62, the beam splitter 64, the lens 65, and the sample cell 16 are disposed in series on a straight line $L_1$.

The light source unit 62 emits incident light Ls, and a white light source is used. As the white light source, for example, a supercontinuum (SC) light source is used.

The lens 65 is an objective lens that condenses incident light Ls to the sample cell 16.

The beam splitter 64 has a transmitting and reflecting surface 64a that transmits light incident from one direction and reflects light incident from another direction. The beam splitter 64 is a regular hexahedron-shaped cube type beam splitter.

A shutter 66, a lens 67, a pinhole 68, a lens 69, and a beam splitter 70 are disposed in series on a first axis $C_{11}$ perpendicular to the above-described straight line $L_1$ in the beam splitter 64.

The beam splitter 70 has a transmitting and reflecting surface 70a that transmits light incident from one direction and reflects light incident from another direction. The beam splitter 70 is a regular hexahedron-shaped cube type beam splitter.

A slit 71 and a mirror 72 are disposed in series on the first axis $C_{11}$ to face a surface 70b of the beam splitter 70 on which the lens 69 is not disposed. An opening portion 71a of the slit 71 is opened with respect to the surface 70b. Light passing through the opening portion 71a of the slit 71 is incident on the mirror 72. A diffraction grating 73 on which reflected light reflected by the mirror 72 is incident is further provided.

The diffraction grating 73 is an optical element that wavelength-resolves incident light including scattered light and splits incident light into light of respective wavelengths. Scattered light per wavelength can be obtained by the diffraction grating 73.

A photodetector 74 on which diffracted light generated by diffraction of scattered light in the diffraction grating 73 according to the wavelength is incident is further provided. Scattered light wavelength-resolved by the photodetector 74 is detected for each wavelength. The photodetector 74 is connected to the calculation unit 18.

The photodetector 74 has a plurality of pixels, and detects an average time intensity and time dependency of a light intensity of each pixel. For example, as the photodetector 74, a line camera in which a photoelectric conversion element is disposed on a straight line is used. The photodetector 74 may be a photodetector in which a photomultiplier tube is disposed on a straight line, instead of a line camera.

A spectral detection unit 80 is configured with the mirror 72, the diffraction grating 73, and the photodetector 74.

A shutter 75, a lens 76, a pinhole 77, a lens 78, and a mirror 79 are disposed in series on a second axis $C_{12}$ parallel to the first axis $C_{11}$ with respect to the sample cell 16.

Light reflected by the mirror 79 is incident on a surface 70c of the beam splitter 70, and is reflected toward the mirror 72 by the transmitting and reflecting surface 70a of the beam splitter 70.

As the shutter 66 and the shutter 75, for example, electromagnetic shutters are used. Incidence of light on the beam splitter 70 can be controlled by the shutter 66 and the shutter 75. Any light out of light reflected by the sample cell 16 can be made to be incident on the beam splitter 70 by switching the opening and closing of the shutter 66 and the shutter 75. In a case where both light reflected by the sample cell 16 are measured, measurement is performed by successively switching the shutter 66 and the shutter 75.

The pinhole 68 and the pinhole 77 have a function of confocus, and only a component of light scattered by a focus portion out of light scattered by the dispersion liquid Lq can pass through the pinholes. With this, a measurement region of scattered light of the dispersion liquid Lq can be limited, and measurement can be performed without deteriorating space coherence.

In the particle measurement device 60, as the light source unit 62, for example, a supercontinuum light source is used. The sample cell 16 is irradiated with light from the light source unit 62 via the beam splitter 64 and the lens 65. In the sample cell 16, backward scattered light at a scattering angle of 180° is returned again to the beam splitter 64, is incident on the beam splitter 64 from a surface 64c of the beam splitter 64, is reflected by the transmitting and reflecting surface 64a, and then, passes through the lens 67, the pinhole 68, and the lens 69. In this case, the shutter 66 is open and the shutter 75 is closed.

The pinhole 68 has a function of confocus as described above, and only a component of light scattered by the focus portion out of light scattered by the dispersion liquid Lq can pass through the pinhole 68. With this, a measurement region of scattered light of the sample cell 16 can be limited, and scattered light can be measured without deteriorating space coherence. Thereafter, scattered light that passes through the beam splitter 70, is transmitted through the slit 71, and is reflected by the mirror 72, is incident on the diffraction grating 73, and reaches the photodetector 74 in the spectral detection unit 80 is detected by the photodetector 74. The diffraction grating 73 causes a different pixel to be irradiated with scattered light for each wavelength and spectroscopically detects scattered light. That is, scattered light is detected for each wavelength.

On the other hand, in a case where scattered light reflected at 90° by the sample cell 16 is measured, scattered light passes through the lens 76, the pinhole 77, and the lens 78. In this case, the shutter 75 is open and the shutter 66 is closed. Scattered light that is reflected to the beam splitter 70 by the mirror 79, is reflected by the transmitting and reflecting surface 70a of the beam splitter 70 and passes through the slit 71, and is reflected by the mirror 72, is incident on the diffraction grating 73, and reaches the photodetector 74 in the spectral detection unit 80 is detected by the photodetector 74. In the particle measurement device 60, the intensity of scattered light at a different scattering angle is measured for each wavelength. The particle measurement device 60 can measure the refractive index and the particle size distribution of the single type of particles included in the dispersion liquid in the same manner as the particle measurement device 10.

In the calculation unit 18, it is preferable that the refractive index of the single type of particles calculated by the above-described fitting is compared with a refractive index for a known material in 100% concentration, that is, a refractive index of the known material in a bulk state, and a volume concentration of a constituent material of the single type of particles is calculated using dependency of a refractive index on a particle volume concentration. The volume concentration is synonymous with volume density and a filling rate. The dependency of the refractive index means that the refractive index linearly changes with respect to the volume density, for example.

Even in a particle measurement method, it is preferable that there is provided a step of comparing the calculated refractive index of the single type of particles with a refractive index for a known material in 100% concentration and calculating a volume concentration composing a constituent material of the single type of particles using dependency of the refractive index on a particle volume concentration. With this, for example, density of an aggregate can be estimated from the calculated refractive index of the single type of particles.

In regard to the refractive index for the known material in 100% concentration, a material and a refractive index of the material in 100% concentration are associated, and are stored as a library in the calculation unit 18.

(Third Example of Particle Measurement Device)

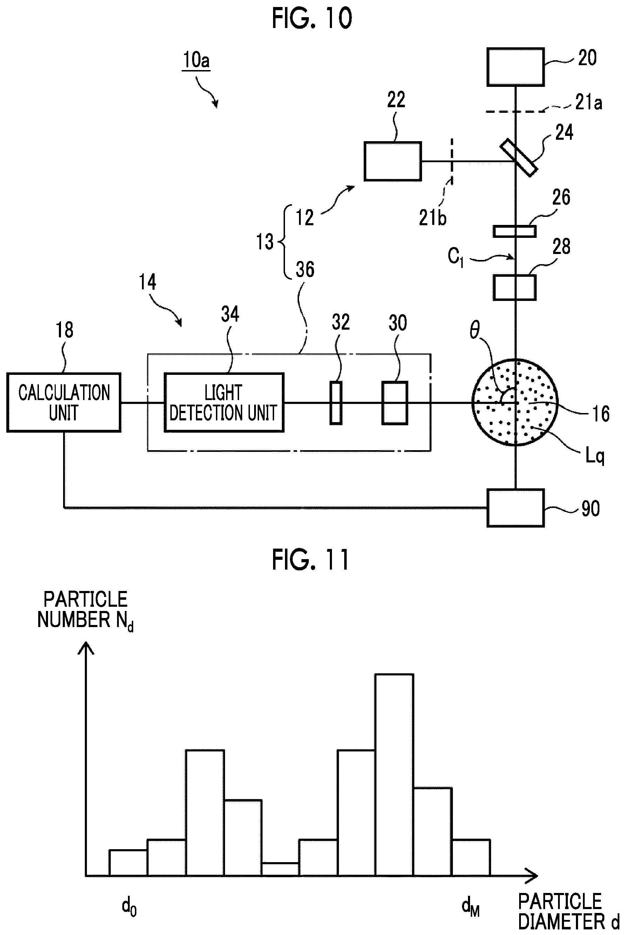

Fig. 10 is a schematic view showing a third example of a particle measurement device of the embodiment of the present invention.

In a particle measurement device 10a shown in Fig. 10, the same components as those in the particle measurement device 10 shown in Fig. 1 are represented by the same reference numerals, and detailed description thereof will not be repeated.

The particle measurement device 10a shown in Fig. 10 is different from the particle measurement device 10 shown in Fig. 1 in that transmittance of the dispersion liquid Lq is measured, and a transmitted light measurement unit 90 that measures transmittance is provided. The transmitted light measurement unit 90 is connected to the calculation unit 18. As the transmitted light measurement unit 90, for example, a photomultiplier tube or a photodiode is used.

In the particle measurement device 10a, the transmitted light measurement unit 90 faces the polarizer 28 with the sample cell 16 sandwiched therebetween and is disposed on an optical axis $C_1$.

The transmitted light measurement unit 90 measures a light intensity of transmitted light transmitted through the sample cell 16, and is not particularly limited to a photomultiplier tube as long as the light intensity of transmitted light can be measured. The light intensity of transmitted light obtained by the transmitted light measurement unit 90 is output to the calculation unit 18. In the calculation unit 18, the transmittance of the dispersion liquid Lq is calculated, and transmittance data of the dispersion liquid Lq is obtained. A transmittance measurement unit is configured with the calculation unit 18 and the transmitted light measurement unit 90, and the transmittance of the dispersion liquid Lq is measured by the transmittance measurement unit. In a case where a light intensity of incident light on the sample cell 16 is $I_i$, and a light intensity of transmitted light transmitted through the sample cell 16 is $I_o$, transmittance Ts is $I_o/I_i$. The transmittance Ts is represented by Expression (3) described below.

$$\text{Ts} = \exp(-\tau_a L) \tag{3}$$

In Expression (3) of the transmittance Ts, $\tau_a$ is a light absorption coefficient, and L is an optical path length. The light absorption coefficient $\tau_a$ is represented by Expression (4) described below. In Expression (4) described below, N is a particle number (a subscript d represents dependence on the particle diameter d).

$C^{ext}$ is an extinction cross-sectional area (d is a particle diameter, and m is a relative complex refractive index (m = $n_c/n_0$) of a particle with respect to a refractive index n0 of a solvent: a complex refractive index of the particle is $n_c = n + ik$.)). Each of subscripts 0 to M of d is an ordinal number of a bin of a histogram of particles shown in Fig. 11.

$$\tau_a = \sum_{d=d_0}^{d_M} N_d C_{d,m}^{ext} \tag{4}$$

The extinction cross-sectional area $C^{ext}$ is represented by the following expression. $a_n$ and $b_n$ of the expression of the extinction cross-sectional area $C^{ext}$ are represented by the following expressions. $\Psi_n(\rho)$ and $\zeta_n(\rho)$ are represented by the following expressions.

$$C_{d,m}^{ext} = \frac{\lambda^2}{2\pi} \sum_{n=1}^{\infty} (2n+1)\text{Re}(a_n + b_n)$$

$$a_n = \frac{\psi_n(\alpha)\psi_n'(m\alpha) - m\psi_n'(\alpha)\psi_n(m\alpha)}{\zeta_n(\alpha)\psi_n'(m\alpha) - m\zeta_n'(\alpha)\psi_n(m\alpha)}$$

$$b_n = \frac{m\psi_n(\alpha)\psi_n'(m\alpha) - \psi_n'(\alpha)\psi_n(m\alpha)}{m\zeta_n(\alpha)\psi_n'(m\alpha) - \zeta_n'(\alpha)\psi_n(m\alpha)}$$

$$\psi_n(\rho) = \rho j_n(\rho), \psi_n'(\alpha) = \frac{d}{d\rho}\psi_n(\rho)\Big|_{\rho=\alpha}$$

$$\zeta_n(\rho) = \rho h_n^{(2)}(\rho), \zeta_n'(\alpha) = \frac{d}{d\rho}\zeta_n(\rho)\Big|_{\rho=\alpha}$$

$$\alpha = \frac{\pi d}{\lambda}$$

In the above-described expressions, $\Psi_n(\rho)$ and $\zeta_n(\rho)$ are Riccati-Bessel functions. $j_n(\rho)$ is a spherical Bessel function of a first kind, and $h_n^{(2)}(\rho)$ is a spherical Hankel function of a second kind. $\lambda$ is a wavelength.

The calculation unit 18 of the particle measurement device 10a calculates the complex refractive index and the particle diameter distribution of the single type of particles by calculating a plurality of pieces of scattering intensity time variation characteristic data of the measurement parameter and a plurality of pieces of scattering intensity parameter-dependent data of the measurement parameter from a plurality of pieces of scattering intensity data obtained by the scattered light measurement unit 14, and fitting a plurality of pieces of calculated scattering intensity time variation characteristic data of the measurement parameter and a plurality of pieces of calculated scattering intensity parameter-dependent data of the measurement parameter and the transmittance data of the dispersion liquid using a theoretical formula or a simulation based on a theory of electromagnetic wave behavior that defines a relationship of the complex refractive index, the particle diameter, and the scattering intensity and a theoretical formula or a simulation based on a theory of electromagnetic wave behavior that defines a relationship of the complex refractive index, the particle diameter, and the transmittance. The fitting will be described below.

The scattering intensity time variation characteristic data of the measurement parameter and the scattering intensity parameter-dependent data of the measurement parameter, and the transmittance data calculated by the simulation based on the theory of electromagnetic wave behavior, instead of the theoretical formula that defines the relationship of the complex refractive index, the particle diameter, and the scattering intensity and the theoretical formula that defines the relationship of the complex refractive index, the particle diameter, and the transmittance, may be used.

In the calculation unit 18, the calculated scattering intensity time variation characteristic data of the measurement parameter described above is calculated based on a Stokes-Einstein's theoretical formula. For example, the scattering intensity parameter-dependent data is calculated based on at least one of a Mie scattering theoretical formula, a discrete dipole approximation method (DDA method), or a finite-difference time-domain method (FDTD method). The discrete dipole approximation method (DDA method) and the finite-difference time-domain method (FDTD method) correspond to the simulation based on the theory of electromagnetic wave behavior. A method corresponding to the simulation based on the theory of electromagnetic wave behavior can be suitably used, and is not particularly limited to the discrete dipole approximation method (DDA method) and the finite-difference time-domain method (FDTD method) described above.

The theoretical formula is not particularly limited to the above-described formula, and various theoretical formulas, such as a scattering theory, can be suitably used.

In the simulation based on the theory of electromagnetic wave behavior regarding the complex refractive index, the particle diameter, and the transmittance, for example, as the simulation based on the theory of electromagnetic wave behavior regarding the complex refractive index, the particle diameter, and the scattering intensity, a Mie scattering theoretical formula, a discrete dipole approximation method (DDA method), and a finite-difference time-domain method (FDTD method) can be used.

The transmittance of the dispersion liquid Lq is not limited as being measured by the particle measurement device 10a, and the transmittance of the dispersion liquid Lq measured in advance may be used. For this reason, even in the particle measurement device 10 shown in Fig. 1, as the particle measurement device 10a, the complex refractive index can be calculated.

(Second Example of Particle Measurement Method)

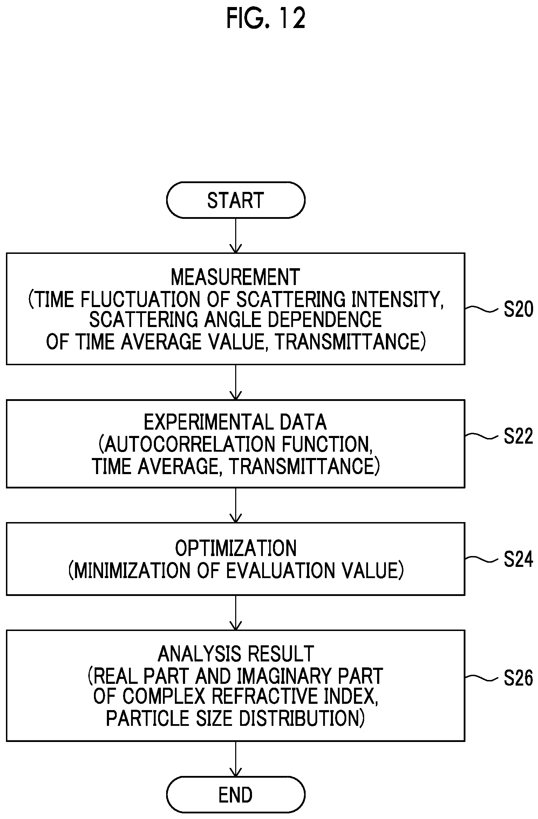

Fig. 12 is a flowchart illustrating an example of a particle measurement method of the embodiment of the present invention.

The second example of the particle measurement method is different from the first example of the particle measurement method in that the complex refractive index is calculated using the scattering intensity of the dispersion liquid.

The second example of the particle measurement method is different from the first example of the particle measurement method in that the transmittance of the dispersion liquid is used and the complex refractive index having a real part and an imaginary part is calculated. The transmittance of the dispersion liquid may be measured before the scattering intensity of the dispersion liquid to be measured is measured or may be measured after the measurement of the scattering intensity. In a case where the transmittance of the dispersion liquid is known, the known transmittance can also be used.

As shown in Fig. 12, the particle measurement method has, for example, a measurement step (Step S20), a step of obtaining experimental data (Step S22), and an optimization step (Step S24). Through the optimization step (Step S24), an analysis result (Step S26), that is, the complex refractive index and the particle diameter distribution of the single type of particles are obtained (Step S26).

In the measurement step (Step S20), for example, the time fluctuation of the scattering intensity, scattering angle dependence of a time average value of the scattering intensity, and the transmittance of the dispersion liquid are measured.

In the step of obtaining experimental data (Step S22), for example, an autocorrelation function with respect to the time fluctuation of the scattering intensity is obtained based on a measured value of the measurement step (Step S20). The scattering angle dependence of the time average value of the scattering intensity or a wavelength-dependent time average value of the scattering intensity is obtained. The transmittance of the dispersion liquid is measured, and the transmittance data is obtained. With this, for example, the scattering intensity per scattering angle shown in Fig. 3 is obtained. In addition, the transmittance of the dispersion liquid is obtained. A timing of obtaining the transmittance data may be the above-described measurement step (Step S20). Note that, because it should suffice that there is the transmittance data in the fitting, a step of obtaining the transmittance data may be executed before the fitting, that is, before a step of calculating the complex refractive index and the particle diameter distribution of the single type of particles. In a case where the transmittance data is known, because the known transmittance data can be used, the step of obtaining the transmittance data is not always required.

In the optimization step (Step S24), for example, the autocorrelation function and the theoretical formula of the scattering intensity and the transmittance of the dispersion liquid are fitted to the autocorrelation function of the time fluctuation of the scattering intensity and the time average value of the scattering intensity, and the transmittance of the dispersion liquid obtained in Step S22. In Step S24, after an initial value is set for a particle number with respect to a particle diameter of a single particle, the particle number is updated such that an evaluation value is minimized, to obtain a final particle number. The initial value is set by generating a random variable.

Hereinafter, the particle measurement method will be more specifically described in detail, including the fitting.

First, the dispersion liquid Lq is irradiated with, for example, laser light having a wavelength of 488 nm from the second light source unit 22 shown in Fig. 10. Scattered light scattered by irradiation is detected by the light detection unit 34 at a predetermined scattering angle for a predetermined time. With this, the scattering intensity of the dispersion liquid Lq at the scattering angle can be obtained. A light intensity of transmitted light of laser light transmitted through the dispersion liquid Lq is also measured by the transmitted light measurement unit 90.

Next, the rotation unit 36 rotates the scattered light measurement unit 14 to change the scattering angle θ, and the scattering intensity of the dispersion liquid Lq is obtained. The change of the scattering angle and the measurement of the scattering intensity of the dispersion liquid Lq are repeatedly performed, and the scattering intensity of the dispersion liquid Lq is measured a plurality of times. The value of the scattering angle is two angles or more, and for example, the scattering intensity is measured for every 5° from 30° to 160°. The above step is the measurement step, and corresponds to Step S20 described above.

Next, the calculation unit 18 calculates the scattering intensity time variation characteristic data from the time dependence of the scattering intensity of the dispersion liquid Lq obtained by the measurement step. The scattering intensity time variation characteristic data is an autocorrelation function or a power spectrum.

The autocorrelation function is calculated from the scattering intensity of the dispersion liquid using a known method. The power spectrum is also calculated from the scattering intensity of the dispersion liquid using a known method.

In this manner, the scattering intensity time variation characteristic data is obtained for each scattering angle. That is, there are a plurality of pieces of time variation data.

In the calculation unit 18, the transmittance of the dispersion liquid Lq is calculated from the light intensity of laser light and the light intensity of transmitted light transmitted through the dispersion liquid Lq by the above-described expression. In a case where the wavelength of laser light is changed, the transmittance is obtained for each wavelength of laser light. That is, wavelength-dependent data of the transmittance is obtained.

Next, the calculation unit 18 calculates the scattering intensity parameter-dependent data from the scattering intensity of the dispersion liquid obtained by the measurement step.

The scattering intensity parameter-dependent data of the dispersion liquid is obtained, for example, by calculating the time average value of the scattering intensity of the dispersion liquid for each scattering angle. With this, for example, data of the scattering intensity per scattering angle shown in Fig. 3 is obtained.

The above step of calculating the time variation characteristic data of the scattering intensity of the dispersion liquid and the parameter-dependent data of the scattering intensity of the dispersion liquid, and the transmittance of the dispersion liquid Lq is the calculation step, and corresponds to Step S22 described above.

Next, in the calculation unit 18, the time variation characteristic data of the scattering intensity of at least one scattering angle, the parameter-dependent data of the scattering intensity of a plurality of scattering angles, and the transmittance data of the dispersion liquid are fitted using the theoretical formula or the simulation based on the theory of electromagnetic wave behavior that defines the relationship of the complex refractive index, the particle diameter, and the scattering intensity and the theoretical formula or the simulation based on the theory of electromagnetic wave behavior that defines the relationship of the complex refractive index, the particle diameter, and the transmittance. The complex refractive index and the particle size distribution of the single type of particles are calculated by the fitting. This corresponds to Steps S24 and S26 described above. The theoretical formula that defines the relationship of the complex refractive index, the particle diameter, and the transmittance is, for example, the expression of the light absorption coefficient $\tau_a$ of Expression (4) described above.

As described above, one type of particles is included in the dispersion liquid.

A linear autocorrelation function is represented by $g^{(1)}(\tau) = \exp(-Dq^2\tau)$ as described above. In regard to a relationship between a diffusion coefficient obtained from the autocorrelation function and a particle size, a Stokes-Einstein's formula that is used in a normal dynamic light scattering method is applied.

In a case where the particles have a particle size distribution, the linear autocorrelation function is represented by Expression (1) described above. The scattering intensity is represented by Expression (2) described above. Expressions (1) and (2) described above are theoretical formulas, and both $I_e^{total}$ in Expressions (1) and (2) are calculated values.

<Second Example of Fitting>

Hereinafter, the fitting for calculating the complex refractive index and the particle size distribution of the single type of particles will be described. In the fitting, the complex refractive index and the particle size distribution of the single type of particles are finally calculated with the particle number as a variable.

A secondary autocorrelation function $g^{(2)}(\tau)$ is measured for each scattering angle, and while it is desirable that the scattering angle is two angles or more, but may be one angle. The number of scattering angles for measurement is suitably decided according to the number of variables to be calculated or the number of pieces of scattering intensity parameter-dependent data of the measurement parameter.

In the fitting, in regard to the linear autocorrelation function per scattering angle, an initial particle number is set with the particle number as a variable in Expression (1). A calculated value of the linear autocorrelation function of Expression (1) based on the set initial particle number is obtained. A calculated value of the secondary autocorrelation function $g^{(2)}(\tau) = 1 + \beta \cdot |g^{(1)}(\tau)|^2$ is obtained from the calculated value of the linear autocorrelation function. $\beta$ is a device constant.

A difference between the measured value of the secondary autocorrelation function and the calculated value of the secondary autocorrelation function is obtained for each scattering angle. The difference between the measured value of the secondary autocorrelation function and the calculated value of the secondary autocorrelation function is referred to as a difference in secondary autocorrelation function. The difference in secondary autocorrelation function is obtained for each scattering angle. The calculated value of the secondary autocorrelation function per scattering angle corresponds to the scattering intensity time variation characteristic data of the measurement parameter calculated by the theoretical formula.

The total scattering intensity $I^{total}$ is measured for each scattering angle. In Expression (2), a value of the total scattering intensity $I_e^{total}$ of Expression (2) based on the set initial particle number is obtained.

A difference between the measured value of the total scattering intensity $I^{total}$ shown in Fig. 3 and the calculated value of the total scattering intensity $I_e^{total}$ of Expression (2) is obtained for each scattering angle. The difference between the measured value of the total scattering intensity $I^{total}$ and the calculated value of the total scattering intensity $I_e^{total}$ of Expression (2) at any scattering angle is referred to as a difference in total scattering intensity $I^{total}$ at the scattering angle. In regard to the total scattering intensity $I^{total}$, the difference in total scattering intensity $I^{total}$ at the scattering angle is obtained. The calculated value of the total scattering intensity $I_\theta^{total}$ of Expression (2) corresponds to the scattering intensity parameter-dependent data of the measurement parameter calculated by the theoretical formula.

A difference between the measured value of the transmittance and the calculated value of the transmittance Ts of $Ts = \exp(-\tau_a L)$ of Expression (3) is calculated. The difference between the measured value of the transmittance and the calculated value of the transmittance Ts is called a difference in transmittance.

In the fitting, to calculate the final particle number and the refractive index, the difference in secondary autocorrelation function obtained for each scattering angle and the difference in total scattering intensity at the scattering angle, and the difference in transmittance are used. For example, an evaluation value obtained by adding a value, which is obtained by adding a value of the square of the difference in secondary autocorrelation function obtained for each scattering angle and a value of the square of the difference in total scattering intensity at the scattering angle for all scattering angles, and a value of the square of the difference in transmittance is used. The particle number with which the evaluation value is minimized is set as the final particle number.

For this reason, in the fitting, the particle number and the relative complex refractive index m are repeatedly updated in Expressions (1), (2), and (4) such that the evaluation value is minimized, to obtain the final particle number and the relative complex refractive index m. Thereafter, assuming that the type, that is, the refractive index of the solvent is known, a refractive index n of the particle is obtained from the relative complex refractive index m.

In the fitting, the values of the particle number and the relative complex refractive index m are updated in Expressions (1), (2), and (4) described above while reflecting the expression indicating the relative complex refractive index m described above, and the measured values and the calculated values are fitted, so that the final particle number and the relative complex refractive index m are obtained. The complex refractive index is fitted through the expression indicating the relative complex refractive index m described above.

In regard to the particle numbers with respect to all particle diameters, an initial value is set, and then, is updated such that the evaluation value is minimized. With this, the histogram of the particles can be obtained. That is, $N_d{}^c$ is calculated for all $d = d_0$ to $d_M$, whereby the particle diameter distribution can be obtained. This corresponds to Step S26 described above.

The above step is the step of calculating the particle size distribution of the single type of particles (Step S26). The evaluation value that is used for the fitting is not limited to the value described above.

An optimization method of the fitting is not limited to the method described above, and for example, Bayesian optimization can be used for the fitting.

While the secondary autocorrelation function is used, the present invention is not limited thereto, and a power spectrum may be used in place of the secondary autocorrelation function. In a case where the linear autocorrelation function is measured through heterodyne detection, the linear autocorrelation function may be used.

Measurement results at different wavelengths can also be added to the calculated wavelength dependence of the complex refractive index, in addition to the scattering angle. That is, a plurality of measurement wavelengths of two wavelengths or more are used, the scattered light intensity is measured for each of a plurality of measurement wavelengths to obtain a plurality of pieces of scattered light data. The transmittance is measured using a plurality of measurement wavelengths of two wavelengths or more to obtain the transmittance of each measurement wavelength. The number of types of particles, and the complex refractive index and the particle size distribution of each type of particle can also be calculated. In this case, the scattering angle may be one angle or may be a plurality of two angles or more.

The wavelength dependence of the complex refractive index can be obtained by changing the measurement wavelength. The wavelength dependence of the complex refractive index is also called refractive index distribution. In a case where the measurement wavelength is changed as the measurement parameter, the number of measurement wavelengths is not limited to two and may be three or four wavelengths as long as the number of measurement wavelengths is plural.

In addition, the volume concentration of the dispersion liquid can be used for the fitting.

In this case, the calculation unit 18 can calculate the complex refractive index of the single type of particles and a particle diameter distribution of a number concentration by fitting using the scattering intensity time variation characteristic data and the scattering intensity parameter-dependent data, the transmittance data, and volume concentration data of the dispersion liquid. Here, the volume concentration data of the dispersion liquid is data indicating the volume concentration of the dispersion liquid, and a volume concentration $\varphi$ is represented by the following expression. In the expression of the volume concentration $\varphi$ described below, d is a particle diameter.

The particle diameter distribution of the number concentration is a distribution of the number of particles per unit volume of the dispersion liquid with respect to the particle diameter. $N_d$ is the number of particles per unit volume of the dispersion liquid.

$$\phi = \sum_{d=d_0}^{d_M} N_d \cdot \frac{4\pi(d/2)^3}{3}$$

In a case where the volume concentration of the dispersion liquid is known, a difference between a value of the volume concentration and a calculated value of the volume concentration $\varphi$ represented by the following expression is calculated. A difference between a measured value of the volume concentration and the calculated value of the volume concentration $\varphi$ is called a difference in volume concentration. A value of the known volume concentration is, for example, a measured value.

As a method of calculating the volume concentration of the dispersion liquid, for example, there is a method of centrifugally sedimenting the particles in the dispersion liquid to measure a particle weight and to calculate a dispersion medium weight and calculating the volume concentration of the dispersion liquid from specific gravities of the particles and the dispersion medium.

In the fitting, to calculate the final particle number and the complex refractive index, the difference in secondary autocorrelation function obtained for each scattering angle described above, the difference in total scattering intensity at the scattering angle, the difference in transmittance, and the difference in volume concentration are used. For example, an evaluation value obtained by adding a value, which is obtained by adding a value of the square of the difference in secondary autocorrelation function obtained for each scattering angle and a value of the square of the difference in total scattering intensity at the scattering angle for all scattering angles, a value of the square of the difference in transmittance, and a value of the square of the difference in volume concentration is used. The particle number with which the evaluation value is minimized is set as the final particle number. In this case, the particle number is obtained as a number concentration. With this, the number of particles in the dispersion liquid is obtained as an absolute value.

(Fourth Example of Particle Measurement Device)

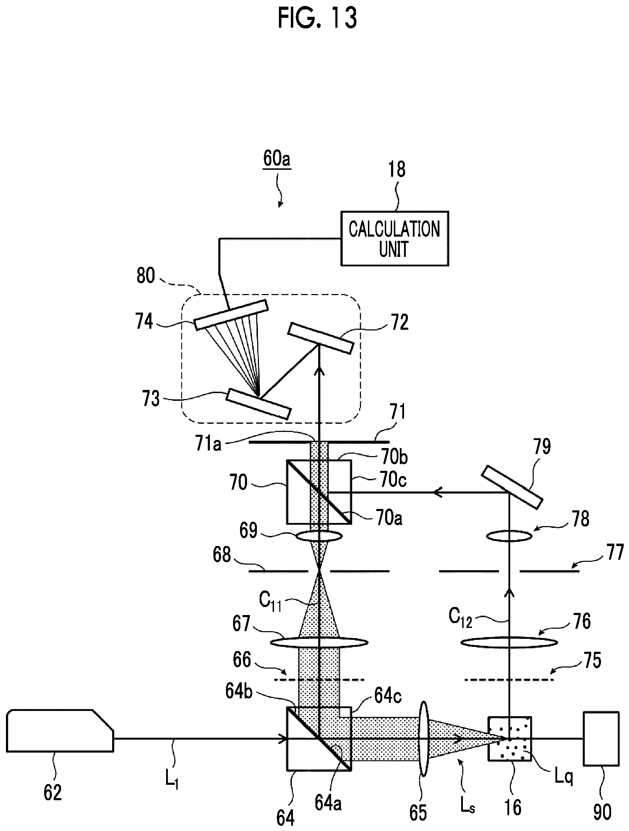

Fig. 13 is a schematic view showing a fourth example of a particle measurement device of the embodiment of the present invention.

In a particle measurement device 60a shown in Fig. 13, the same components as those in the particle measurement device 60 shown in Fig. 9 are represented by the same reference numerals, and detailed description thereof will not be repeated.

The particle measurement device 60a shown in Fig. 13 is different from the particle measurement device 60 shown in Fig. 9 in that the transmittance of the dispersion liquid Lq is measured and the transmitted light measurement unit 90 that measures transmittance is provided. The transmitted light measurement unit 90 is disposed to face the lens 65 with the sample cell 16 sandwiched therebetween.

The transmitted light measurement unit 90 is connected to the calculation unit 18 (not shown). As the particle measurement device 10a shown in Fig. 10, a transmittance measurement unit is configured with the calculation unit 18 and the transmitted light measurement unit 90. The transmittance of the dispersion liquid Lq is measured by the transmittance measurement unit. The transmitted light measurement unit 90 has the same configuration as in the particle measurement device 10a shown in Fig. 10, and for example, a photomultiplier tube or a photodiode is used. A complex refractive index can be calculated using the measurement device 60a.

The transmittance of the dispersion liquid Lq is not limited as being measured by the particle measurement device 60a, and the transmittance of the dispersion liquid Lq measured in advance may be used. For this reason, even in the particle measurement device 60 shown in Fig. 9, as the particle measurement device 60a, the complex refractive index can be calculated.

The present invention is basically configured as described above. Although the particle measurement device and the particle measurement method of the present invention have been described above in detail, the present invention is not limited to the above-described embodiment, and various improvements or alterations may be of course made without departing from the scope of the appended claims.

[Example 1]

Hereinafter, the features of the present invention will be further specifically described with reference to an example. Any materials, reagents, mass of substances and their ratios, operations and so forth shown in Example below may appropriately be altered, without departing from the scope of the appended claims.

Accordingly, the scope of the present invention is not limited to the following example.

In the present example, dynamic light scattering measurement of a dispersion liquid including particles is performed using the scattering angle as the measurement parameter. The following samples 1 and 2 are used as the dispersion liquid.

The sample 1 is an aqueous dispersion liquid in which pure water is used as a solvent and polystyrene particles are used as particles. The polystyrene particles have a primary particle diameter of 990 nm. The primary particle diameter of the polystyrene particles is a catalog value.

The sample 2 is an aqueous dispersion liquid in which pure water is used as a solvent and titanium oxide particles are used as particles. The titanium oxide particles have a primary particle diameter of 30 to 50 nm. The primary particle diameter of the titanium oxide particles is a catalog value.

A concentration of the particles of the sample 1 is $4 \times 10^{-4}$% by mass. A concentration of the particles of the sample 2 is $4 \times 10^{-3}$% by mass.

Laser light having a wavelength of 633 nm is used, a time average intensity of scattered light is measured under a condition that the scattering angle is changed from 30° to 160° by 5°, and time-dependent data is measured under a condition that the scattering angle is 50°, 90°, and 140°. A scattered light intensity at each scattering angle is measured to calculate an autocorrelation function, and a theoretical formula is fitted to the autocorrelation function to calculate a refractive index and a particle size distribution of the particles.

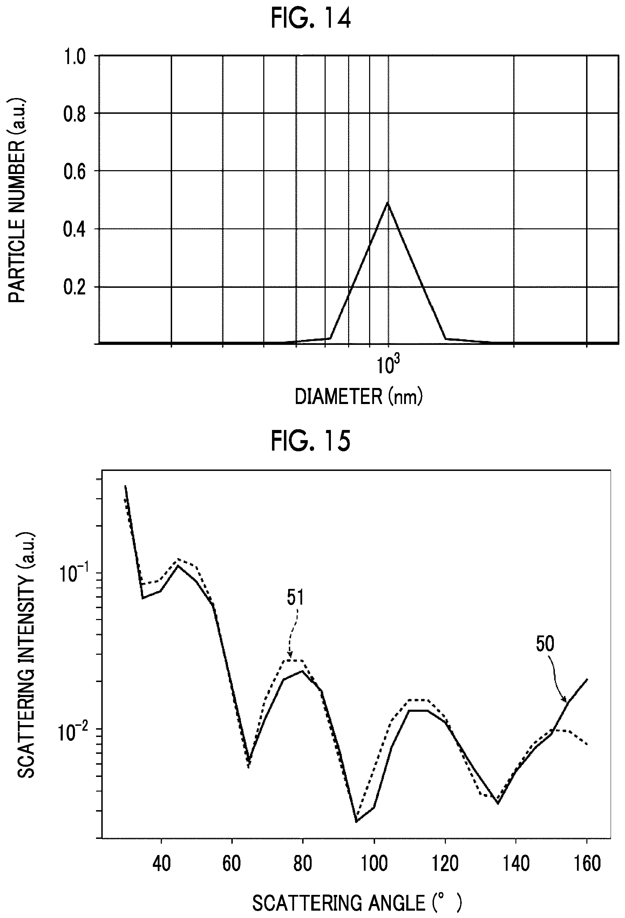

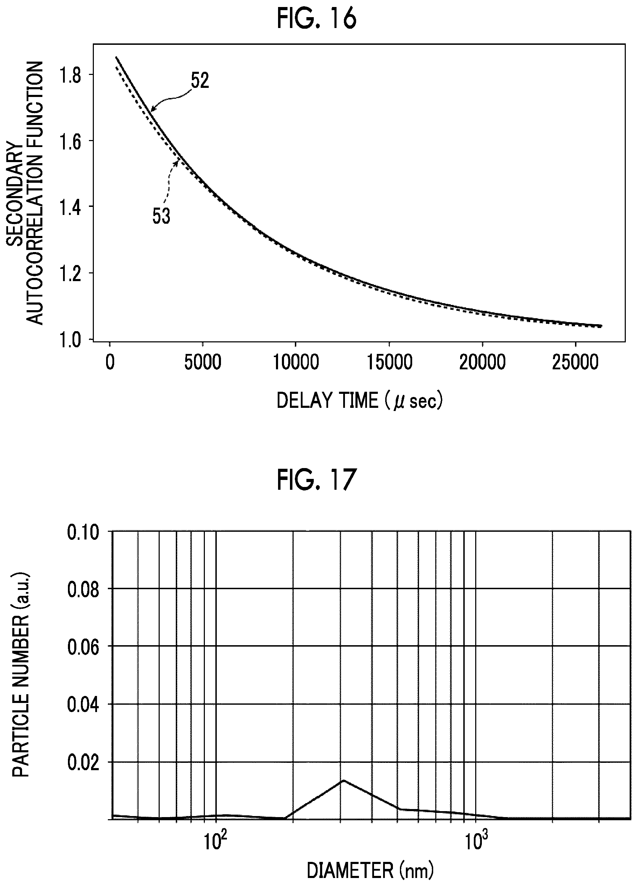

Here, Fig. 14 is a graph showing a particle size distribution of the polystyrene particles, Fig. 15 is a graph showing a relationship between a scattering intensity and a scattering angle of the polystyrene particles, and Fig. 16 is a graph showing a secondary autocorrelation function of the polystyrene particles.

In regard to the sample 1, the particle size distribution shown in Fig. 14 is obtained. The refractive index of 1.56 is obtained. The fitting is as described above. The values of the particle number and the relative complex refractive index m are updated in Expressions (1) and (2) while reflecting the expression indicating the relative complex refractive index m described above, and the measured values and the calculated values are fitted. The refractive index is fitted through the expression indicating the relative complex refractive index m described above. In this manner, the final particle number and the relative complex refractive index m are obtained. The particle size distribution is obtained by the final particle number.

A result of the fitting of the sample 1 is examined. As shown in Fig. 15, for the scattering intensity, a profile 50 indicating a measured value and a profile 51 by the fitting match each other. The profile 51 is a calculated value by Expression (2) described above.

As shown in Fig. 16, for the secondary autocorrelation function, a profile 52 indicating a measured value and a profile 53 by the fitting match each other.

The secondary autocorrelation function is calculated by $g^{(2)}(\tau) = 1 + \beta \cdot |g^{(1)}(\tau)|^2$ described above.

In this case, in the sample 1, convergence of a solution by the fitting is also correctly performed. It is understood from the obtained particle size distribution that the particles have a primary particle size, are monodispersed in water, and are under a condition that the refractive index can also be correctly measured.

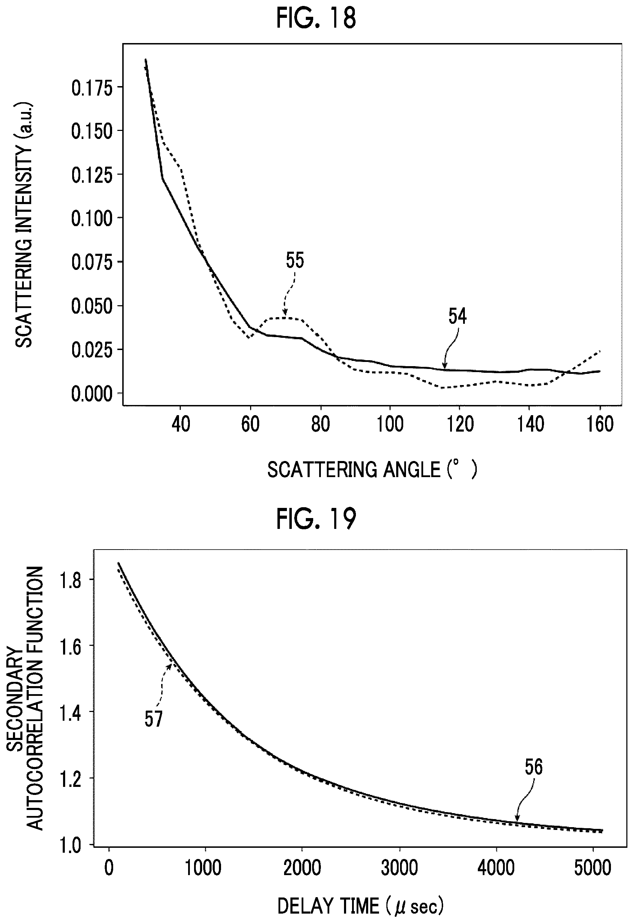

Here, Fig. 17 is a graph showing a particle size distribution of the titanium oxide particles, Fig. 18 is a graph showing a relationship between a scattering intensity and a scattering angle of the titanium oxide particles, and Fig. 19 is a graph showing a secondary autocorrelation function of the titanium oxide particles.

In regard to the sample 2, the particle size distribution shown in Fig. 17 is obtained. The refractive index of 2.28 is obtained.

A result of the fitting of the sample 2 is examined. As shown in Fig. 18, for the scattering intensity, a profile 54 indicating a measured value and a profile 55 by the fitting match with each other.

As shown in Fig. 19, for the secondary autocorrelation function, a profile 56 indicating a measured value and a profile 57 by the fitting match each other.

The secondary autocorrelation function is calculated by $g^{(2)}(\tau) = 1 + \beta \cdot |g^{(1)}(\tau)|^2$ described above.

In this way, in the sample 2, convergence of a solution by the fitting is also correctly performed. Because the obtained particle size distribution is large to be 300 nm, it is understood that the particles are aggregated, and the obtained refractive index is a refractive index of an aggregate of nanoparticles.

The fitting is as described above. The values of the particle number and the relative complex refractive index m are updated in Expressions (1) and (2) while reflecting the expression indicating the relative complex refractive index m described above, and the measured values and the calculated values are fitted. The refractive index is fitted through the expression indicating the relative complex refractive index m described above. In this manner, the final particle number and the relative complex refractive index m are obtained. The particle size distribution is obtained by the final particle number.

In general, a refractive index of a rutile type of titanium oxide used in the sample 2 is 2.7. Because the aggregate is composed of water having a refractive index of 1.3 and titanium oxide in terms of volume, assuming that the refractive index is linearly changed with respect to the volume density, it can be estimated that the refractive index is 2.4 at a filling rate of 74% of titanium oxide in a closely filled structure, and the refractive index is about 2.28 at the filling rate of 70%. In this case, the density of the aggregate can be estimated from the refractive index. For the calculation of the refractive index, effective media approximation (EMA) may be used.

[Example 2]

In the present example, dynamic light scattering measurement of a dispersion liquid including particles is performed using the scattering angle as the measurement parameter. The following sample 3 is used as the dispersion liquid.

For the sample 3, a single dispersion liquid in which Pigment Red 254 is dispersed in a dispersion medium is used.

An organic solvent having a refractive index of 1.4 is used as the dispersion medium.

A measurement wavelength of a scattering intensity is set to 488 nm. A measurement wavelength of transmittance is set to 488 nm, and an optical path length of measurement light of transmittance is set to 10 mm.

Laser light having a wavelength of 488 nm is used, a time average intensity of scattered light is measured under a condition that the scattering angle is 30° to 160° (at intervals of 10°), and time-dependent data is measured under a condition that the scattering angle is 50°, 90°, and 150°. A scattered light intensity at each scattering angle is measured to calculate an autocorrelation function.

A light intensity of transmitted light is measured with laser light having a wavelength of 488 nm as incident light, and transmittance is calculated. A light intensity of incident light is known.

A theoretical formula is fitted to the autocorrelation function, the scattering intensity, and the transmittance to calculate a complex refractive index and a particle size distribution of the particles.

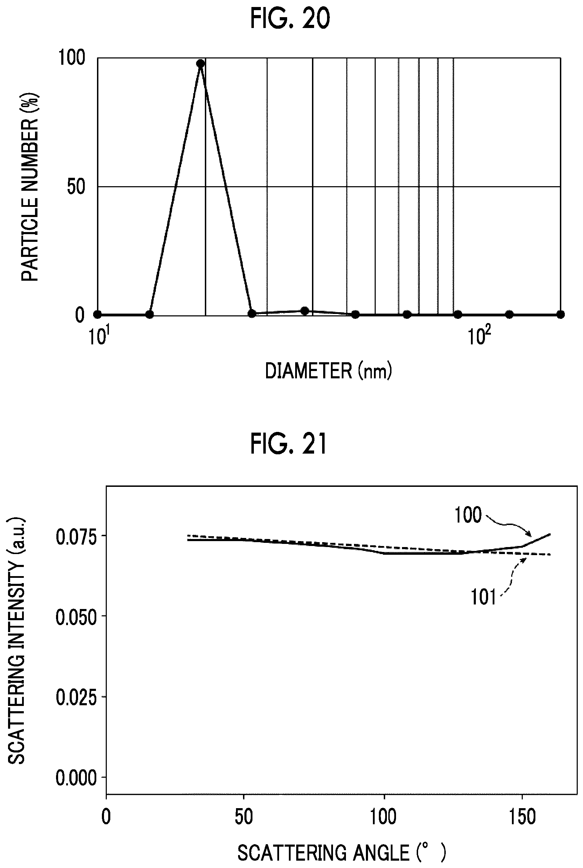

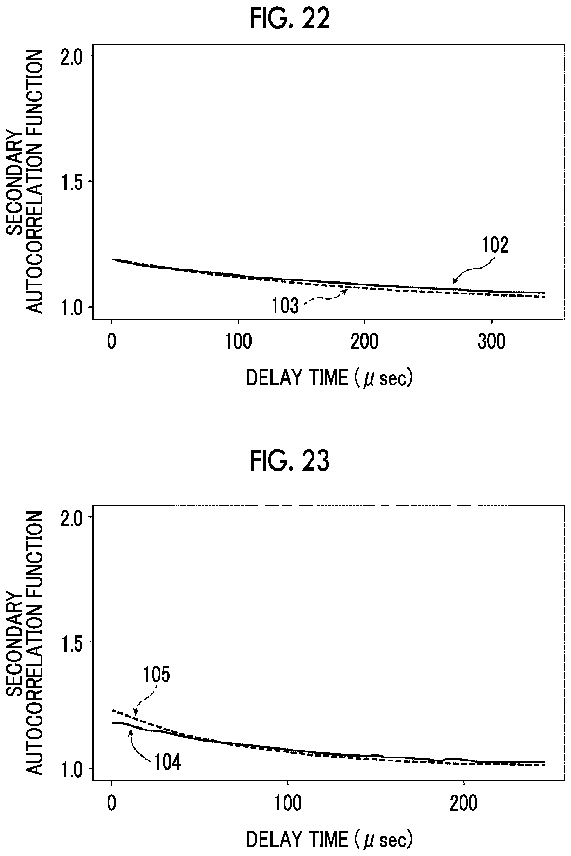

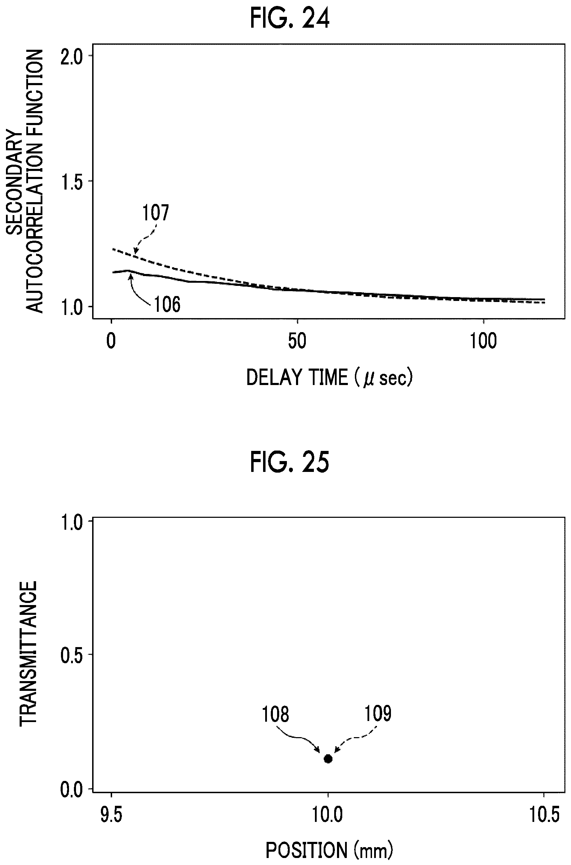

Here, Fig. 20 is a graph showing a particle size distribution of a sample 3. Fig. 21 is a graph showing a relationship between a scattering intensity and a scattering angle of the sample 3. Fig. 22 is a graph showing a secondary autocorrelation function of the sample 3 at the scattering angle of 50°, Fig. 23 is a graph showing a secondary autocorrelation function of the sample 3 at the scattering angle of 90°, and Fig. 24 is a graph showing a secondary autocorrelation function of the sample 3 at the scattering angle of 150°. Fig. 25 is a graph showing the transmittance of the sample 3.

In regard to the sample 3, the particle size distribution shown in Fig. 20 is obtained. The complex refractive index of the sample 3 is 1.61+0.19i.

The fitting is as described above. The values of the particle number and the relative complex refractive index m are updated in Expressions (1), (2), and (4) while reflecting the expression indicating the relative complex refractive index m described above, and the measured values and the calculated values are fitted. The refractive index is fitted through the expression indicating the relative complex refractive index m described above. In this manner, the final particle number and the relative complex refractive index m are obtained. The particle size distribution shown in Fig. 20 is obtained by the final particle number. The complex refractive index of the particles is obtained from the relative complex refractive index m. The complex refractive index includes not only a real part but also an imaginary part.

A result of the fitting of the sample 3 is examined. As shown in Fig. 21, for the scattering intensity, a profile 100 indicating a measured value and a profile 101 by the fitting match each other. The profile 101 is a calculated value by Expression (2) described above.

As shown in Fig. 22, for the secondary autocorrelation function at the scattering angle of 50°, a profile 102 indicating a measured value and a profile 103 by the fitting match each other.

As shown in Fig. 23, for the secondary autocorrelation function at the scattering angle of 90°, a profile 104 indicating a measured value and a profile 105 by the fitting match each other.

As shown in Fig. 24, for the secondary autocorrelation function at the scattering angle of 150°, a profile 106 indicating a measured value and a profile 107 by the fitting match each other.

The secondary autocorrelation function is calculated by $g^{(2)}(\tau) = 1 + \beta \cdot |g^{(1)}(\tau)|^2$ described above.

As shown in Fig. 25, for the transmittance, a measured value 108 and a value 109 by the fitting match each other. The measured value 108 is a calculated value by Expression (3).

In this way, in the sample 3, convergence of a solution by the fitting is also correctly performed. It is understood from the obtained particle size distribution that the particles have a primary particle size and are monodispersed in a dispersion medium, and are under a condition that the complex refractive index can also be correctly measured.

Explanation of References

    10: particle measurement device
    12: incidence setting unit
    13: parameter setting unit
    14: scattered light measurement unit
    16: sample cell
    18: calculation unit
    20: first light source unit
    21a: first shutter
    21b: second shutter
    22: second light source unit
    24: half mirror
    26, 32: condenser lens
    28, 30: polarizer
    34: light detection unit
    36: rotation unit
    37, 38, 39: secondary autocorrelation function
    40, 41, 42, 44, 45, 46, 47, 48: profile
    50, 51, 52, 53, 54, 55, 56, 57: profile
    60: particle measurement device
    62: light source unit
    64, 70: beam splitter
    64a, 70a: transmitting and reflecting surface
    64c, 70b, 70c: surface
    65, 67, 69, 76, 78: lens
    66, 75: shutter
    68, 77: pinhole
    71: slit

71a: opening portion
72, 79: mirror
73: diffraction grating
74: photodetector
80: spectral detection unit
90: transmitted light measurement unit
100, 101, 102, 103, 104, 105: profile
106, 107: profile
108: measured value
109: value by fitting
$C_1$: optical axis
$C_{11}$: first axis
$C_{12}$: second axis
$L_1$: straight line
Lq: dispersion liquid
Ls: incident light
$\theta$: scattering angle

**Claims**

1. A particle measurement device (10, 60) of a dispersion liquid including a single type of particles, the particle measurement device comprising:

   a light source unit (20, 22, 62) that irradiates the dispersion liquid with measurement light;
   a parameter setting unit (13) that sets at least one of a scattering angle or a measurement wavelength as a measurement parameter;
   a scattered light measurement unit (14) that obtains a plurality of pieces of scattering intensity data by measuring a scattering intensity of scattered light emitted from the dispersion liquid by the measurement light a plurality of times while changing a value of the measurement parameter set by the parameter setting unit a plurality of times; and
   a calculation unit (18) that calculates a complex refractive index and a particle diameter distribution of the single type of particles by calculating scattering intensity time variation characteristic data and scattering intensity parameter-dependent data from the plurality of pieces of scattering intensity data obtained by the scattered light measurement unit and fitting the calculated scattering intensity time variation characteristic data and the calculated scattering intensity parameter-dependent data and transmittance data of the dispersion liquid using a theoretical formula or a simulation based on a theory of electromagnetic wave behavior that defines a relationship of the complex refractive index, a particle diameter, and the scattering intensity and a theoretical formula or a simulation based on a theory of electromagnetic wave behavior that defines a relationship of the complex refractive index, the particle diameter, and transmittance.

2. The particle measurement device according to claim 1, further comprising:
   a transmittance measurement unit that measures the transmittance of the dispersion liquid.

3. The particle measurement device according to claim 1 or 2,
   wherein the measurement parameter is the scattering angle, and the scattered light measurement unit obtains the plurality of pieces of scattering intensity data by measuring the scattering intensity of the scattered light of the dispersion liquid for each of a plurality of scattering angles while changing a value of the scattering angle by two angles or more.

4. The particle measurement device according to claim 1 or 2,
   wherein the measurement parameter is the measurement wavelength, and the scattered light measurement unit obtains the plurality of pieces of scattering intensity data by measuring the scattering intensity of the scattered light of the dispersion liquid for each of a plurality of measurement wavelengths using the measurement wavelength of two wavelengths or more.

5. The particle measurement device according to any one of claims 1 to 4,
   wherein the scattered light measurement unit measures a light intensity of a polarized component of the scattered light of the dispersion liquid obtained by irradiating the dispersion liquid with the measurement light having specific polarization, as the scattering intensity.

6. The particle measurement device according to any one of claims 1 to 5, wherein the scattered light measurement unit measures at least one of scattering intensity parameter-dependent data obtained by successively irradiating the dispersion liquid with the measurement light having a plurality of polarization states or scattering intensity parameter-dependent data obtained by extracting a polarized component of the scattered light emitted from the dispersion liquid a plurality of times.

7. The particle measurement device according to any one of claims 1 to 6, wherein the calculated scattering intensity time variation characteristic data of the measurement parameter is calculated based on a Stokes-Einstein's theoretical formula, and the scattering intensity parameter-dependent data of the measurement parameter is calculated based on at least one of a Mie scattering theoretical formula, a discrete dipole approximation method, or a finite-difference time-domain method.

8. The particle measurement device according to any one of claims 3 to 7, wherein the calculation unit compares the calculated refractive index of the single type of particles with a refractive index for a known material in 100% concentration and calculates a volume concentration of a constituent material of the single type of particles using dependency of the refractive index with respect to a particle volume concentration.

9. The particle measurement device according to claim 1, wherein the calculation unit calculates the complex refractive index of the single type of particles and a particle diameter distribution of a number concentration by fitting using the scattering intensity time variation characteristic data, the scattering intensity parameter-dependent data, the transmittance data, and volume concentration data of the dispersion liquid.

10. A particle measurement method of a dispersion liquid including a single type of particles,

    wherein at least one of a scattering angle or a measurement wavelength is set as a measurement parameter, and the particle measurement method comprises:

        a measurement step of measuring a scattering intensity of scattered light emitted from the dispersion liquid by measurement light a plurality of times while changing a value of the set measurement parameter a plurality of times;
        a calculation step of calculating scattering intensity time variation characteristic data and scattering intensity parameter-dependent data from a plurality of pieces of scattering intensity data obtained by the measurement step; and
        a step of calculating a complex refractive index and a particle diameter distribution of the single type of particles by fitting transmittance data of the dispersion liquid, and the scattering intensity time variation characteristic data and the scattering intensity parameter-dependent data, which are obtained by the calculation step, using a theoretical formula or a simulation based on a theory of electromagnetic wave behavior that defines a relationship of the complex refractive index, a particle diameter, and the scattering intensity and a theoretical formula or a simulation based on a theory of electromagnetic wave behavior that defines a relationship of the complex refractive index, the particle diameter, and transmittance.

11. The particle measurement method according to claim 10, further comprising:
    a step of measuring the transmittance of the dispersion liquid and obtaining the transmittance data.

12. The particle measurement method according to 10 or 11, wherein the measurement parameter is the scattering angle, and in the measurement step, the scattering intensity of the scattered light of the dispersion liquid is measured for each of a plurality of scattering angles while changing a value of the scattering angle by two angles or more.

13. The particle measurement method according to 10 or 11, wherein the measurement parameter is the measurement wavelength, and in the measurement step, the scattering intensity of the scattered light of the dispersion liquid is measured for each of a plurality of measurement wavelengths using the measurement wavelength of two wavelengths or more.

**14.** The particle measurement method according to any one of claims 10 to 13,
wherein, in the measurement step, a light intensity of a polarized component of the scattered light of the dispersion liquid obtained by irradiating the dispersion liquid with the measurement light having specific polarization is measured as the scattering intensity.

**15.** The particle measurement method according to any one of claims 10 to 14,
wherein, in the measurement step, at least one of scattering intensity parameter-dependent data obtained by successively irradiating the dispersion liquid with the measurement light having a plurality of polarization states or scattering intensity parameter-dependent data obtained by extracting a polarized component of the scattered light emitted from the dispersion liquid a plurality of times is measured.

**16.** The particle measurement method according to any one of claims 10 to 15,
wherein the calculated scattering intensity time variation characteristic data of the measurement parameter is calculated based on a Stokes-Einstein's theoretical formula, and the scattering intensity parameter-dependent data of the measurement parameter is calculated based on at least one of a Mie scattering theoretical formula, a discrete dipole approximation method, or a finite-difference time-domain method.

**17.** The particle measurement method according to any one of claims 12 to 16, further comprising:
a step of comparing the calculated refractive index of the single type of particles with a refractive index for a known material in 100% concentration and calculating a volume concentration of a constituent material of the single type of particles using dependency of the refractive index with respect to a particle volume concentration.

**18.** The particle measurement method according to claim 10,
wherein the complex refractive index of the single type of particles and a particle diameter distribution of a number concentration are calculated by fitting using the scattering intensity time variation characteristic data, the scattering intensity parameter-dependent data, the transmittance data, and volume concentration data of the dispersion liquid.

**Patentansprüche**

**1.** Partikelmessvorrichtung (10, 60) einer Dispersionsflüssigkeit, die einen einzigen Typ von Partikeln enthält, wobei die Partikelmessvorrichtung umfasst:

eine Lichtquelleneinheit (20, 22, 62), die die Dispersionsflüssigkeit mit Messlicht bestrahlt;
eine Parametereinstelleinheit (13), die mindestens eines von einem Streuwinkel und einer Messwellenlänge als einen Messparameter einstellt;
eine Streulichtmesseinheit (14), die mehrere Streuintensitätsdaten durch mehrmaliges Messen einer Streuintensität von Streulicht, das von der Dispersionsflüssigkeit durch das Messlicht emittiert wird, während sie einen Wert des von der Parametereinstelleinheit eingestellten Messparameters mehrmals ändert, erhält; und
eine Berechnungseinheit (18), die einen komplexen Brechungsindex und eine Partikeldurchmesser-Verteilung des einzigen Typs von Partikeln durch Berechnen von Streuintensitäts-Zeitverlaufs-Eigenschaftsdaten und Streuintensitätsparameter-abhängigen Daten aus den mehreren Streuintensitätsdaten, die von der Streulichtmesseinheit erhalten werden, und Anpassen der berechneten Streuintensitäts-Zeitverlaufs-Eigenschaftsdaten und der berechneten Streuintensitätsparameter-abhängigen Daten und Transmissionsdaten der Dispersionsflüssigkeit unter Verwendung einer theoretischen Formel oder einer Simulation, die auf einer Theorie von elektromagnetischem Wellenverhalten basiert, die eine Beziehung zwischen dem komplexen Brechungsindex, einem Partikeldurchmesser und der Streuintensität definiert, und einer theoretischen Formel oder einer Simulation, die auf einer Theorie von elektromagnetischem Wellenverhalten basiert, die eine Beziehung zwischen dem komplexen Brechungsindex, dem Partikeldurchmesser und der Transmission definiert,
berechnet.

**2.** Partikelmessvorrichtung nach Anspruch 1, ferner umfassend:
eine Transmissionsmesseinheit, die die Transmission der Dispersionsflüssigkeit misst.

**3.** Partikelmessvorrichtung nach Anspruch 1 oder 2
wobei der Messparameter der Streuwinkel ist und die Streulichtmesseinheit die mehreren Streuintensitätsdaten durch Messen der Streuintensität des Streulichts der Dispersionsflüssigkeit für jeden von mehreren Streuwinkeln, während sie einen Wert des Streuwinkels auf zwei oder mehr Winkel ändert, erhält.

4. Partikelmessvorrichtung nach Anspruch 1 oder 2
wobei der Messparameter die Messwellenlänge ist und die Streulichtmesseinheit die mehreren Streuintensitätsdaten durch Messen der Streuintensität des Streulichts der Dispersionsflüssigkeit für jede von mehreren Messwellenlängen unter Verwendung der Messwellenlänge von zwei oder mehr Wellenlängen erhält.

5. Partikelmessvorrichtung nach einem der Ansprüche 1 bis 4,
wobei die Streulichtmesseinheit eine Lichtintensität einer polarisierten Komponente des Streulichts der Dispersionsflüssigkeit, die durch Bestrahlen der Dispersionsflüssigkeit mit dem Messlicht mit spezifischer Polarisation erhalten wird, als die Streuintensität misst.

6. Partikelmessvorrichtung nach einem der Ansprüche 1 bis 5,
wobei die Streulichtmesseinheit mindestens eine von Streuintensitätsparameter-abhängigen Daten, die durch sukzessives Bestrahlen der Dispersionsflüssigkeit mit dem Messlicht, das mehrere Polarisationszustände aufweist, erhalten werden, und Streuintensitätsparameter-abhängigen Daten, die durch Extrahieren einer polarisierten Komponente des Streulichts, das von der Dispersionsflüssigkeit emittiert wird, mehrmals erhalten werden, misst.

7. Partikelmessvorrichtung nach einem der Ansprüche 1 bis 6,
wobei die berechneten Streuintensitäts-Zeitverlaufs-Eigenschaftsdaten des Messparameters auf der Grundlage einer theoretischen Stokes-Einstein'schen Formel berechnet werden und die Streuintensitätsparameter-abhängigen Daten des Messparameters auf der Grundlage von mindestens einem von einer theoretischen Mie-Streuungsformel, einem diskreten Dipolapproximationsverfahren und einem Finite-Difference-Time-Domain-Verfahren berechnet werden.

8. Partikelmessvorrichtung nach einem der Ansprüche 3 bis 7,
wobei die Berechnungseinheit den berechneten Brechungsindex des einzigen Typs von Partikeln mit einem Brechungsindex für ein bekanntes Material in 100 %-Konzentration vergleicht und eine Volumenkonzentration eines Bestandteil-Materials des einzigen Typs von Partikeln unter Verwendung von Abhängigkeit des Brechungsindex in Bezug auf eine Partikelvolumenkonzentration berechnet.

9. Partikelmessvorrichtung nach Anspruch 1,
wobei die Berechnungseinheit den komplexen Brechungsindex des einzigen Typs von Partikeln und eine Partikeldurchmesser-Verteilung einer Anzahlkonzentration durch Anpassen unter Verwendung der Streuintensitäts-Zeitverlaufs-Eigenschaftsdaten, der Streuintensitätsparameter-abhängigen Daten, der Transmissionsdaten und Volumenkonzentrationsdaten der Dispersionsflüssigkeit berechnet.

10. Partikelmessverfahren einer Dispersionsflüssigkeit, die einen einzigen Typ von Partikeln enthält,

wobei mindestens eines von einem Streuwinkel und einer Messwellenlänge als ein Messparameter eingestellt ist, und
das Partikelmessverfahren umfasst:

einen Messschritt des mehrmaligen Messens einer Streuintensität von Streulicht, das von der Dispersionsflüssigkeit durch Messlicht emittiert wird, während ein Wert des eingestellten Messparameters mehrmals geändert wird;
einen Berechnungsschritt des Berechnens von Streuintensitäts-Zeitverlaufs-Eigenschaftsdaten und Streuintensitätsparameter-abhängigen Daten aus mehreren Streuintensitätsdaten, die durch den Messschritt erhalten werden; und
einen Schritt des Berechnens eines komplexen Brechungsindex und einer Partikeldurchmesser-Verteilung des einzigen Typs von Partikeln durch Anpassen von Transmissionsdaten der Dispersionsflüssigkeit und der Streuintensitäts-Zeitverlaufs-Eigenschaftsdaten und der Streuintensitätsparameter-abhängigen Daten, die durch den Berechnungsschritt erhalten werden, unter Verwendung einer theoretischen Formel oder einer Simulation, die auf einer Theorie von elektromagnetischem Wellenverhalten basiert, die eine Beziehung zwischen dem komplexen Brechungsindex, einem Partikeldurchmesser und der Streuintensität definiert, und einer theoretischen Formel oder einer Simulation, die auf einer Theorie von elektromagnetischem Wellenverhalten basiert, die eine Beziehung zwischen dem komplexen Brechungsindex, dem Partikeldurchmesser und der Transmission definiert.

11. Partikelmessverfahren nach Anspruch 10, ferner umfassend:

einen Schritt des Messens der Transmission der Dispersionsflüssigkeit und des Erhaltens der Transmissionsdaten.

12. Partikelmessverfahren nach Anspruch 10 oder 11,
wobei der Messparameter der Streuwinkel ist und bei dem Messschritt die Streuintensität des Streulichts der Dispersionsflüssigkeit für jeden von mehreren Streuwinkeln gemessen wird, während ein Wert des Streuwinkels auf zwei oder mehr Winkel geändert wird.

13. Partikelmessverfahren nach Anspruch 10 oder 11,
wobei der Messparameter die Messwellenlänge ist und bei dem Messschritt die Streuintensität des Streulichts der Dispersionsflüssigkeit für jede von mehreren Messwellenlängen unter Verwendung der Messwellenlänge von zwei oder mehr Wellenlängen gemessen wird.

14. Partikelmessverfahren nach einem der Ansprüche 10 bis 13,
wobei bei dem Messschritt eine Lichtintensität einer polarisierten Komponente des Streulichts der Dispersionsflüssigkeit, die durch Bestrahlen der Dispersionsflüssigkeit mit dem Messlicht, das spezifische Polarisation aufweist, erhalten wird, als die Streuintensität gemessen wird.

15. Partikelmessverfahren nach einem der Ansprüche 10 bis 14,
wobei bei dem Messschritt mindestens eine von Streuintensitätsparameter-abhängigen Daten, die durch sukzessives Bestrahlen der Dispersionsflüssigkeit mit dem Messlicht, das mehrere Polarisationszustände aufweist, und Streuintensitätsparameter-abhängigen Daten, die durch Extrahieren einer polarisierten Komponente des Streulichts, das von der Dispersionsflüssigkeit emittiert wird, mehrmals erhalten werden, gemessen wird.

16. Partikelmessverfahren nach einem der Ansprüche 10 bis 15,
wobei die berechneten Streuintensitäts-Zeitverlaufs-Eigenschaftsdaten des Messparameters auf der Grundlage einer theoretischen Stokes-Einstein'schen Formel berechnet werden und die Streuintensitätsparameter-abhängigen Daten des Messparameters auf der Grundlage von mindestens einem von einer theoretischen Mie-Streuungsformel, einem diskreten Dipolapproximationsverfahren und einem Finite-Difference-Time-Domain-Verfahren berechnet werden.

17. Partikelmessverfahren nach einem der Ansprüche 12 bis 16, ferner umfassend:
einen Schritt des Vergleichens des berechneten Brechungsindex des einzigen Typs von Partikeln mit einem Brechungsindex für ein bekanntes Material in 100 %-Konzentration und des Berechnens einer Volumenkonzentration eines Bestandteil-Materials des einzigen Typs von Partikeln unter Verwendung von Abhängigkeit des Brechungsindex in Bezug auf eine Partikelvolumenkonzentration.

18. Partikelmessverfahren nach Anspruch 10,
wobei der komplexe Brechungsindex des einzigen Typs von Partikeln und eine Partikeldurchmesser-Verteilung einer Anzahlkonzentration durch Anpassen unter Verwendung der Streuintensitäts-Zeitverlaufs-Eigenschaftsdaten, der Streuintensitätsparameter-abhängigen Daten, der Transmissionsdaten und Volumenkonzentrationsdaten der Dispersionsflüssigkeit berechnet werden.

**Revendications**

1. Dispositif de mesure de particules (10, 60) d'un liquide de dispersion incluant un seul type de particules,
le dispositif de mesure de particules comprenant :

une unité de source de lumière (20, 22, 62) qui irradie le liquide de dispersion avec de la lumière de mesure ;
une unité de définition de paramètre (13) qui définit au moins l'un d'un angle de diffusion ou d'une longueur d'onde de mesure comme un paramètre de mesure ;
une unité de mesure de lumière diffusée (14) qui obtient une pluralité d'éléments de données d'intensité de diffusion en mesurant une intensité de diffusion de lumière diffusée émise par le liquide de dispersion par la lumière de mesure une pluralité de fois tout en changeant une valeur du paramètre de mesure défini par l'unité de définition de paramètre une pluralité de fois ; et
une unité de calcul (18) qui calcule un indice de réfraction complexe et une distribution de diamètre de particules du seul type de particules en calculant des données de caractéristique de variation temporelle d'intensité de diffusion et des données de dépendance paramétrique d'intensité de diffusion à partir de la pluralité d'éléments de données d'intensité de diffusion obtenus par l'unité de mesure de lumière diffusée et en ajustant les données de caractéristique de variation temporelle d'intensité de diffusion calculées et les données de dépendance paramétrique d'intensité de diffusion calculées et les données de transmittance du liquide de dispersion en utilisant une formule théorique ou une simulation sur la base d'une théorie de comportement d'ondes électromagnétiques qui définit une relation de l'indice de réfraction complexe, d'un diamètre de particules et de l'intensité de diffusion et une formule théorique ou une simulation sur la base d'une théorie de comportement d'ondes électromagnétiques qui définit une relation de l'indice de réfraction complexe, du diamètre de particules et de la transmittance.

2.  Dispositif de mesure de particules selon la revendication 1, comprenant en outre :
une unité de mesure de transmittance qui mesure la transmittance du liquide de dispersion.

3.  Dispositif de mesure de particules selon la revendication 1 ou la revendication 2, dans lequel le paramètre de mesure est l'angle de diffusion, et l'unité de mesure de lumière diffusée obtient la pluralité d'éléments de données d'intensité de diffusion en mesurant l'intensité de diffusion de la lumière diffusée du liquide de dispersion pour chacun d'une pluralité d'angles de diffusion tout en changeant une valeur de l'angle de diffusion par deux angles ou plus.

4.  Dispositif de mesure de particules selon la revendication 1 ou la revendication 2, dans lequel le paramètre de mesure est la longueur d'onde de mesure, et l'unité de mesure de lumière diffusée obtient la pluralité d'éléments de données d'intensité de diffusion en mesurant l'intensité de diffusion de la lumière diffusée du liquide de dispersion pour chacune d'une pluralité de longueurs d'onde de mesure en utilisant la longueur d'onde de mesure de deux longueurs d'onde ou plus.

5.  Dispositif de mesure de particules selon l'une quelconque des revendications 1 à 4, dans lequel l'unité de mesure de lumière diffusée mesure une intensité de lumière d'une composante polarisée de la lumière diffusée du liquide de dispersion obtenue en irradiant le liquide de dispersion avec la lumière de mesure ayant une polarisation spécifique, en tant qu'intensité de diffusion.

6.  Dispositif de mesure de particules selon l'une quelconque des revendications 1 à 5, dans lequel l'unité de mesure de lumière diffusée mesure au moins l'une des données de dépendance paramétrique d'intensité de diffusion obtenues en irradiant successivement le liquide de dispersion avec la lumière de mesure ayant une pluralité d'états de polarisation ou des données de dépendance paramétrique d'intensité de diffusion obtenues en extrayant une composante polarisée de la lumière diffusée émise par le liquide de dispersion une pluralité de fois.

7.  Dispositif de mesure de particules selon l'une quelconque des revendications 1 à 6, dans lequel les données de caractéristique de variation temporelle d'intensité de diffusion calculées du paramètre de mesure sont calculées sur la base d'une formule théorique de Stokes-Einstein, et les données de dépendance paramétrique d'intensité de diffusion du paramètre de mesure sont calculées sur la base d'au moins l'une d'une formule théorique de diffusion de Mie, d'une méthode d'approximation dipôle discrète ou d'une méthode de domaine temporel à différences finies.

8.  Dispositif de mesure de particules selon l'une quelconque des revendications 3 à 7, dans lequel l'unité de calcul compare l'indice de réfraction calculé du seul type de particules à un indice de réfraction pour un matériau connu à une concentration de 100 % et calcule une concentration volumique d'un matériau constitutif du seul type de particules en utilisant une dépendance de l'indice de réfraction par rapport à une concentration volumique de particules.

9.  Dispositif de mesure de particules selon la revendication 1,
dans lequel l'unité de calcul calcule l'indice de réfraction complexe du seul type de particules et une distribution de diamètre de particules d'une concentration en nombre en ajustant en utilisant les données de caractéristique de variation temporelle d'intensité de diffusion, les données de dépendance paramétrique d'intensité de diffusion, les données de transmittance et des données de concentration volumique du liquide de dispersion.

10. Procédé de mesure de particules d'un liquide de dispersion incluant un seul type de particules,

dans lequel au moins l'un d'un angle de diffusion et d'une longueur d'onde de mesure est défini comme un paramètre de mesure, et
le procédé de mesure de particules comprend :

une étape de mesure consistant à mesurer une intensité de diffusion de lumière diffusée émise par le liquide

**EP 4 361 594 B1**

de dispersion par lumière de mesure une pluralité de fois tout en changeant une valeur du paramètre de mesure défini une pluralité de fois ;
une étape de calcul consistant à calculer des données de caractéristique de variation temporelle d'intensité de diffusion et des données de dépendance paramétrique d'intensité de diffusion à partir d'une pluralité d'éléments de données d'intensité de diffusion obtenus par l'étape de mesure ; et
une étape de calcul consistant à calculer un indice de réfraction complexe et une distribution de diamètre de particules du seul type de particules en ajustant des données de transmittance du liquide de dispersion, et les données de caractéristique de variation temporelle d'intensité de diffusion et les données de dépendance paramétrique d'intensité de diffusion, qui sont obtenues par l'étape de calcul, en utilisant une formule théorique ou une simulation sur la base d'une théorie de comportement d'ondes électromagnétiques qui définit une relation de l'indice de réfraction complexe, d'un diamètre de particules et de l'intensité de diffusion et une formule théorique ou une simulation sur la base d'une théorie de comportement d'ondes électromagnétiques qui définit une relation de l'indice de réfraction complexe, du diamètre de particules et de la transmittance.

11. Procédé de mesure de particules selon la revendication 10, comprenant en outre :
une étape de mesure de la transmittance du liquide de dispersion et d'obtention des données de transmittance.

12. Procédé de mesure de particules selon la revendication 10 ou la revendication 11, dans lequel le paramètre de mesure est l'angle de diffusion, et dans l'étape de mesure, l'intensité de diffusion de la lumière diffusée du liquide de dispersion est mesurée pour chacun d'une pluralité d'angles de diffusion tout en changeant une valeur de l'angle de diffusion par deux angles ou plus.

13. Procédé de mesure de particules selon la revendication 10 ou la revendication 11, dans lequel le paramètre de mesure est la longueur d'onde de mesure, et dans l'étape de mesure, l'intensité de diffusion de la lumière diffusée du liquide de dispersion est mesurée pour chacune d'une pluralité de longueurs d'onde de mesure en utilisant la longueur d'onde de mesure de deux longueurs d'onde ou plus.

14. Procédé de mesure de particules selon l'une quelconque des revendications 10 à 13, dans lequel, dans l'étape de mesure, une intensité de lumière d'une composante polarisée de la lumière diffusée du liquide de dispersion obtenue en irradiant le liquide de dispersion avec la lumière de mesure ayant une polarisation spécifique est mesurée en tant qu'intensité de diffusion.

15. Procédé de mesure de particules selon l'une quelconque des revendications 10 à 14, dans lequel, dans l'étape de mesure, au moins l'une des données de dépendance paramétrique d'intensité de diffusion obtenues en irradiant successivement le liquide de dispersion avec la lumière de mesure ayant une pluralité d'états de polarisation ou des données de dépendance paramétrique d'intensité de diffusion obtenues en extrayant une composante polarisée de la lumière diffusée émise par le liquide de dispersion une pluralité de fois est mesurée.

16. Procédé de mesure de particules selon l'une quelconque des revendications 10 à 15, dans lequel les données de caractéristique de variation temporelle d'intensité de diffusion calculées du paramètre de mesure sont calculées sur la base d'une formule théorique de Stokes-Einstein, et les données de dépendance paramétrique d'intensité de diffusion du paramètre de mesure sont calculées sur la base d'au moins l'une d'une formule théorique de diffusion de Mie, d'une méthode d'approximation dipôle discrète ou d'une méthode de domaine temporel à différences finies.

17. Procédé de mesure de particules selon l'une quelconque des revendications 12 à 16, comprenant en outre :
une étape de comparaison de l'indice de réfraction calculé du seul type de particules avec un indice de réfraction pour un matériau connu à une concentration de 100 % et de calcul d'une concentration volumique d'un matériau constitutif du seul type de particules en utilisant la dépendance de l'indice de réfraction par rapport à une concentration volumique de particules.

18. Procédé de mesure de particules selon la revendication 10,
dans lequel l'indice de réfraction complexe du seul type de particules et une distribution de diamètre de particules d'une concentration en nombre sont calculés par ajustement en utilisant les données de caractéristique de variation temporelle d'intensité de diffusion, les données de dépendance paramétrique d'intensité de diffusion, les données de transmittance et des données de concentration volumique du liquide de dispersion.

# FIG. 1

# FIG. 2

```
            ┌─────────────┐
            │    START    │
            └─────────────┘
                   │
                   ▼
┌──────────────────────────────────────────────┐
│              MEASUREMENT                       │
│ (TIME FLUCTUATION OF SCATTERING INTENSITY,     │──── S10
│      SCATTERING ANGLE DEPENDENCE               │
│        OF TIME AVERAGE VALUE)                   │
└──────────────────────────────────────────────┘
                   │
                   ▼
┌──────────────────────────────────────────────┐
│              EXPERIMENTAL DATA                  │
│ (AUTOCORRELATION FUNCTION, TIME AVERAGE)       │──── S12
└──────────────────────────────────────────────┘
                   │
                   ▼
┌──────────────────────────────────────────────┐
│                OPTIMIZATION                    │
│    (MINIMIZATION OF EVALUATION VALUE)          │──── S14
└──────────────────────────────────────────────┘
                   │
                   ▼
┌──────────────────────────────────────────────┐
│              ANALYSIS RESULT                   │
│ (REAL PART OF COMPLEX REFRACTIVE INDEX,        │──── S16
│       PARTICLE SIZE DISTRIBUTION)              │
└──────────────────────────────────────────────┘
                   │
                   ▼
            ┌─────────────┐
            │     END     │
            └─────────────┘
```

## FIG. 3

## FIG. 4

30

# FIG. 5

## FIG. 6

## FIG. 7

FIG. 8

## FIG. 9

# FIG. 10

# FIG. 11

# FIG. 12

START

↓

MEASUREMENT
(TIME FLUCTUATION OF SCATTERING INTENSITY,
SCATTERING ANGLE DEPENDENCE
OF TIME AVERAGE VALUE, TRANSMITTANCE) ⟩ S20

↓

EXPERIMENTAL DATA
(AUTOCORRELATION FUNCTION,
TIME AVERAGE, TRANSMITTANCE) ⟩ S22

↓

OPTIMIZATION
(MINIMIZATION OF EVALUATION VALUE) ⟩ S24

↓

ANALYSIS RESULT
(REAL PART AND IMAGINARY PART
OF COMPLEX REFRACTIVE INDEX,
PARTICLE SIZE DISTRIBUTION) ⟩ S26

↓

END

# FIG. 13

## FIG. 14

## FIG. 15

## FIG. 16

## FIG. 17

## FIG. 18

## FIG. 19

## FIG. 20

## FIG. 21

## FIG. 22

## FIG. 23

## FIG. 24

## FIG. 25

**REFERENCES CITED IN THE DESCRIPTION**

**Patent documents cited in the description**

- JP 2063181 B
- JP H0263181 B

- US 2014152986 A1